(19) **Europäisches Patentamt**
**European Patent Office**
**Office européen des brevets**

(11) **EP 1 208 664 B1**

(12) **EUROPÄISCHE PATENTSCHRIFT**

(45) Veröffentlichungstag und Bekanntmachung des Hinweises auf die Patenterteilung:
**19.07.2006 Patentblatt 2006/29**

(51) Int Cl.:
*H04L 1/00* (2006.01)    *H04B 1/69* (2006.01)
*H04B 17/00* (2006.01)

(21) Anmeldenummer: **00954617.7**

(22) Anmeldetag: **10.08.2000**

(86) Internationale Anmeldenummer:
**PCT/EP2000/007755**

(87) Internationale Veröffentlichungsnummer:
**WO 2001/011814 (15.02.2001 Gazette 2001/07)**

(54) **ÜBERTRAGUNGSVERFAHREN MIT SENDERSEITIGER FREQUENZ- UND ZEITSPREIZUNG**

TRANSMISSION METHOD WITH FREQUENCY AND TIME SPREAD AT TRANSMITTER LEVEL

PROCEDE DE TRANSMISSION AVEC ETALEMENT DE FREQUENCE ET DE TEMPS COTE EMETTEUR

(84) Benannte Vertragsstaaten:
**AT BE CH CY DE DK ES FI FR GB GR IE IT LI LU MC NL PT SE**

(30) Priorität: **10.08.1999 DE 19937706**
**29.01.2000 DE 10004007**

(43) Veröffentlichungstag der Anmeldung:
**29.05.2002 Patentblatt 2002/22**

(73) Patentinhaber: **Nanotron Technologies GmbH**
**10555 Berlin (DE)**

(72) Erfinder:
• **KOSLAR, Manfred**
**D-10629 Berlin (DE)**
• **IANELLI, Zbigniew**
**D-13355 Berlin (DE)**
• **HACH, Rainer**
**D-10589 Berlin (DE)**
• **HOLZ, Rainer**
**D-12159 Berlin (DE)**

(74) Vertreter: **Eisenführ, Speiser & Partner**
**Patentanwälte Rechtsanwälte**
**Postfach 10 60 78**
**28060 Bremen (DE)**

(56) Entgegenhaltungen:
WO-A-98/20625          WO-A-99/39473
DE-A- 3 403 715

EP 1 208 664 B1

**Beschreibung**

Die Erfindung bezieht sich auf ein Übertragungsverfahren zur breitbandigen drahtlosen oder drahtgebundenen Informationsübertragung über einen mit Störungen und Mehrwegeausbreitung behafteten Kanal unter Anwendung von Spreizverfahren.

Die Verwendung von Spreizverfahren zur Übertragung von Nachrichten ist gut bekannt. So werden im Direct Sequence Spread Spectrum Verfahren (DSSS) die Symbole einer zu übertragenden Datenfolge mit einer festgelegten Code-Folge (Chip-Sequenz, Spreading Code) multipliziert und anschließend übertragen. Abhängig von der Anzahl der Chips in der Code-Folge wird dadurch die Bandbreite der Nachricht erhöht. Das Nachrichtensignal erfährt also vor der Übertragung eine Frequenzpreizung.

Im Empfänger, dem die senderseitig zur Spreizung verwendete Code-Folge bekannt ist, wird die Frequenzspreizung durch Korrelation des Empfangssignals mit der Code-Folge wieder aufgehoben - Das empfangene Signal wird in der Frequenz entspreizt.

Die im Sender und Empfänger zur Kodierung und Dekodierung verwendete Code-Folge hat eine feste zeitliche Länge, die mit der Symboldauer der Datenquelle übereinstimmt. Auf Änderungen der Symboldatenrate kann das System nicht reagieren.

Auch im Frequency Hopping Spread Spectrum Verfahren (FHSS) erfährt das zu sendende Signal eine Frequenzspreizung dadurch, daß Einzelpakete der Datenfolge, gesteuert durch eine Code-Folge (hopping sequence), nacheinander in unterschiedlichen Frequenzbereichen eines gegebenen Nachrichtenkanals übertragen werden. Auch hier wird im Empfänger mit Hilfe der bekannten Hopping Sequenz das empfangene Nachrichtsignal wieder entspreizt.

Beiden Verfahren ist gemeinsam, daß sie für die Übertragung von Nachrichtensignalen eine Übertragungsbandbreite benötigen, die einem festen Vielfachen der Basisbandsignalbandbreite entspricht. Systembedingt also können sowohl das Direct-Sequence- als auch das Frequency-Hopping-Verfahren in Punkt-zu-Punkt-Verbindungen die vorhandene Kanalkapazität nur zu einem Teil ausnutzen. Die erreichbaren Symboldatenraten sind im Vergleich zu anderen Übertragungsverfahren gering. Bede Verfahren sind starr organisiert und können sich einer Änderung des Datenaufkommens, das heißt Änderungen der Symbolrate und damit verbunden der Basisbandsignalbandbreite nicht anpassen.

Eine verbesserte Ausnutzung der Kanalkapazität wird mit dem Einsatz dieser Frequenzspreiztechniken in Mehrfach-Zugriffsverfahren (zum Beispiel DS-CDMA) erreicht. Durch die parallele Verwendung verschiedener Code-Folgen für die einzelnen Teilnehmerstationen sowie durch den Einsatz von Raumdiversity kann auch im CDMA-Verfahren theoretisch die bei gegebener Kanalbandbreite maximale Datenrate erreicht werden. Voraussetzung dafür ist eine Synchronisation auf Chip-Ebene. In der Praxis hat sich jedoch gezeigt, daß die optimalen Werte nicht erreicht werden können.

Durch die geringen Symbolraten sind CDMA-Verfahren vergleichsweise unempfindlich gegenüber Störungen der Übertragung durch Mehrwegeausbreitung. Vorteilhaft ist in diesem Zusammenhang auch, daß sie mit korrelativen Selektionsmethoden arbeiten, also die Kanaltrennung durch Korrelation auf der Zeitachse vornehmen. Da Mehrwegeausbreitung Störsignale erzeugt, die andere Zeitbezüge aufweisen, werden durch die zeitkorrelativen Verfahren nicht nur die Nachbarkanäle, sondern auch die Mehrwegesignale unterdrückt.

Sollen über verfügbare Nachrichtenkanäle Daten mit den höchstmöglichen Daterraten übertragen werden, und soll gleichzeitig eine flexible Verteilung der Bandbreitenressourcen erfolgen, dann muß auf andere Zugriffsverfahren zurückgegriffen werden, beispielsweise auf TDMA-Verfahren, die ein flexibles Einzelkanalmanagement zulassen und mit denen bei optimaler spektraler Ausnutzung des Kanals Daterraten bis zur physikalisch möglichen Grenzdatenrate erreicht werden können.

Erhöht man aber bei vorgegebener Kanalbandbreite die Übertragungsdatenrate, dann steigt gleichzeitig auch die Empfindlichkeit gegenüber Störungen (Verzerrungen) durch Mehrwegeausbreitung. Entsteht bei der Übertragung eines informationssymbols über einen Nachrichtenkanal ein Delay Spread bestimmter Länge, dann hängt es von der Symbolrate ab, wie viele der nachfolgenden Symbole durch die auftretenden Reflexionen verzerrt werden. Je höher die Symbolrate ist, desto komplexer werden die Verzerrungen des Symbolstroms und desto schwieriger ist auch die Kompensation (Equalisation) der Multipath-Effekte im Empfänger.

Alle bekannten Verfahren zur Equalisation setzen eine sehr genaue Bestimmung der Kanalparameter voraus. Zu ihrer Ermittlung ist es Stand der Technik, eine Kanalschätzung (Kanalvermessung) durchzuführen. Die Ausgangsgröße dieser Schätzung ist die Impulsantwort des Kanals.

Für die Vermessung von drahtlosen Kanälen gehört es zum Stand der Technik [DE 34 03 715 A1], Signale mit guten autokorrelativen Eigenschaften, im folgenden "Korrelationssignale" genannt, einzusetzen. Die guten Eigenschaften eines Korrelationssignals bestehen darin, daß die Autokorrelation des Signals, die definitionsgemäß eine Funktion der Zeitverschiebung ist, ein ausgeprägtes Maximum bei Zeitverschiebung null besitzt, während zu allen anderen Zeitverschiebungen die Autokorrelation möglichst niedrige Betragswerte aufweist. Anschaulich bedeutet dies, daß die Autokorrelation des Korrelationssignals einen möglichst schmalen Puls mit wenig Ein- und Ausschwingen darstellt. Es sind verschiedene Familien von Korrelationssignalen bekannt. Unter anderem gehören die oft erwähnten und in der Praxis mittels zeitdiskreter Signalverarbeitung realisierten Pseudonoise (PN)-Sequenzen zu den Korrelationssignalen. Um die begrifflichen Eindeutigkeit sicherzustellen, soll die Untermenge der zeitdiskreten Korrelationssignale hier als Korrelationsfolgen definiert werden. Als weitere Beispiele für Korrelationsfolgen seien M-Folgen und Frank Zadoff Chu-Folgen genannt.

Aus der CDMA-Technologie (Direct-Sequence-CDMA) ist es bekannt, Korrelationsfolgen zur Informationsübertragung und zur Kanalselektion in Mehrfachzugriffssystemen einzusetzen. Hierbei sind nicht nur die autokorrelativen Eigenschaften einer Folge von Bedeutung sondern auch die kreuzkorrelativen Eigenschaften innerhalb einer Familie von Folgen. Innerhalb einer Familie mit guten korrelativen Eigenschaften hat die Kreuzkorrelation zwischen zwei beliebigen unterschiedlichen Folgen dieser Familie niedrige Betragswerte im Vergleich zu dem Maximum der Autokorrelation jeder Folge der Familie.

In der Kommunikationstechnik wird auch der Einsatz von Chirp-Impulsen zur Vermessung bestimmter Kanaleigenschaften leitungsgebundener Telefonkanäle [T. Kamitake: "Fast Start-up of am Echo Canceller in a 2-wire Full-duplex Modem", IEEE proc. of ICC'84, pp360-364, May 1984, Amsterdam, Holland] beschrieben.

Chirp-Signale, deren besondere Eignung für Meßzwecke aus der Radartechnik bekannt ist, lassen sich ebenfalls als Korrelationssignale und bei zeitdiskreter Verarbeitung als Korrelationsfolgen interpretieren. Gegenüber den üblicherweise verwendeten PN-Sequenzen sind Chirp-Signale jedoch komplexwertig und weisen eine Vielzahl von Phasenzuständen auf. Weiterhin existieren Vorschläge US 5574748, WO 18/20265, Chirp-Signale für die Informationsübertragung über drahtlose und drahtgebundene Kanäle zu verwenden.

Zum Stand der Technik kann zusammenfassend gesagt werden, daß bei den bekannten Verfahren zur Frequenzspreizung der Vorteil der Störsicherheit einhergeht mit geringen Symbolraten und mit einer geringen spektralen Effizienz. Eine flexible Verteilung der Ressourcen, eine Anpassung der Systeme an sich ändernde Symbolraten, an variable Bandbreitenanforderungen ist mit den bestehenden Verfahren nicht zu erreichen.

Um bei gleicher Bandbreite Nachrichten mit hohen Symbolraten zu übertragen, muß derzeit auf andere Übertragungstechniken ohne Frequenzspreizung zurückgegriffen werden, die einen wichtigen Vorzug der Spreizverfahren, die Robustheit gegen Schmalbandstörungen, nicht aufweisen. Dazu kommt in jedem Fall die Empfindlicfceit der Übertragung gegen Mehrwegeausbreitung, die den Einsatz von Equalizer-Schaltungen und als Voraussetzung dafür eine sehr genaue Bestimmung der Kanaleigenschaften verlangt.

Die Aufgabe der Erfindung ist es, zur Übertragung von Nachrichten über durch Mehrwegeausbreitung gestörte Kanäle ein Mehrfachzugriffsverfahren zu schaffen, das es erlaubt, Signale mit hoher Symbolrate zu übertragen und das bei maximaler spektraler Effizienz flexibel auf Änderungen des Datenaufkommens und auf teilnehmerbezogen variable Anforderungen an Übertragungsgeschwindigkeit und Bitfehlerrate reagieren kann.

Die Erfindung löst diese Aufgabe durch ein Übertragungsverfahren mit den Merkmalen nach einem der Ansprüche 1, 28, 29,30. Vorteilhafte Weiterbildungen sind in den Unteransprüchen, der Beschreibung und den Zeichnungen beschrieben.

Der vorliegenden Erfindung liegt die Erkenntnis zugrunde, in einem Kommunikationssystem, in dem Informationssymbole sequentiell übertragen werden, für jedes Informationssymbol sowohl eine Frequenzspreizung durch Quasidiracpulsformung als auch eine Zeitspreizung durch Faltung des frequenzgespreizten Informationssymbols mit einem Korrelationssignal so durchzuführen, daß für jede Eingangsdatenrate stets die auf Grund der Bandbreite maximal mögliche Frequenzspreizung und die aus realisierungstechnischen Gründen sinnvolle maximale Zeitspreizung der zu übertragenden Informationssymbole sichergestellt ist, was wiederum zu einer minimalen Stöanfälligkeit führt. Die bei hohen Datenraten auftretende zeitliche Überlappung der Korrelationssignale führt zu einer Intersymbointerferenz, die bei geeigneter Wahl der Korrelationssignale und/oder bei korrekter Filtereinstellung vernachlässigbar ist.

Weiterhin wird dasselbe Korrelationssignal ( z.B. Chirp-Signal), das für die Übertragung eines einzelnen Informationssymbols benutzt wird, auch für die Kanalvermessung eingesetzt, was sich stark vereinfachend auf die Struktur des Empfängers auswirkt.

Die Erfindung wird nachfolgend anhand eines in Zeichnungen dargestellten Ausführungsbeispiels näher erläutert. Es zeigen:

| | |
|---|---|
| Figur 1 | ein Blockschaltbild eines erfindungsgemäßen Übertragungssystems; |
| Figur 2 | ein Blockschaltbild einer alternativen Ausführungsform des erfindungsgemäßen Übertragungsverfahrens; |
| Figur 3 | ein weiteres Ausführungsbeispiel der Erfindung anhand eines Blockschaltbildes; |
| Figur 4 | ein Blockschaltbild einer weiteren Variante der Erfindung; |
| Figur 5 | ein Blockschaltbild einer Taktsteuerung im Empfänger; |
| Figur 6 | Signaldiagramme von Signalen aus Figur 3; |
| Figur 7 | Programmablaufplan für eine Kanalschätzung; |
| Figur 8 | Hüllkurve eines komprimierten Chirp-Impulses; |
| Figur 9.1a | Diagramm: Signal-Rauschverhältnis / Kanaldatenrate; |

| Figur 9.1 b | Darstellung von Signalen am Ausgang eines empfangsseitigen Kompressionsfilters; |
| Figur 9.2a | Signaldarstellung einer breitbandigen Übertragungsstörung; |
| Figur 9.2b | Spektrendarstellung eines Sendesignals und der dieses überlagernden breitbandigen Störung; |
| Figur 9.2c | ein Blockschaltbild mit additiver Überlagerung eines Sendesignals und impulsförmiger Störungen; |
| Figur 9.2d | Signaldarstellung komprimierter Chirp-Impulse und gedehnter Störanteile; |
| Figur 9.3 bis Figur 9.8 | Programmablaufpläne für ein erfindungsgemäßes- Zugriffsverfahren; |
| Figur 9.9 | Darstellung eines TDMA-Rahmens mit mehreren Teilnehmer-Zeitschlitzen unterschiedlicher Breite; |
| Figur 9.10a und | Figur 9.10b Darstellung des TDMA-Rahmens mit Zeitslots unterschiedlicher Breite und schematische Darstellung zum Signalverlauf nach empfängerseitiger Kompression; |
| Figur 9.11 | Formeldarstellung zur Berechnung der Spitzenamplituden von empfängerseitig komprimierten Signalen in verschiedenen Zeitschlitzen nach Figur 9.10; |
| Figur 9.12 | Darstellung für die Änderung von Zeitschlitz-(Slot)-Daten bei geänderten Systemanforderungen (gegenüber Fig. 9.10); |
| Figur 9.13 | Formeldarstellung für die Berechnung der Spitzenamplituden der empfängerseitig komprimierten Signale nach Figur 9.12; |
| Figur 9.14 | Darstellung der Einhüllenden des Sendesignals nach Figur 9.9. |

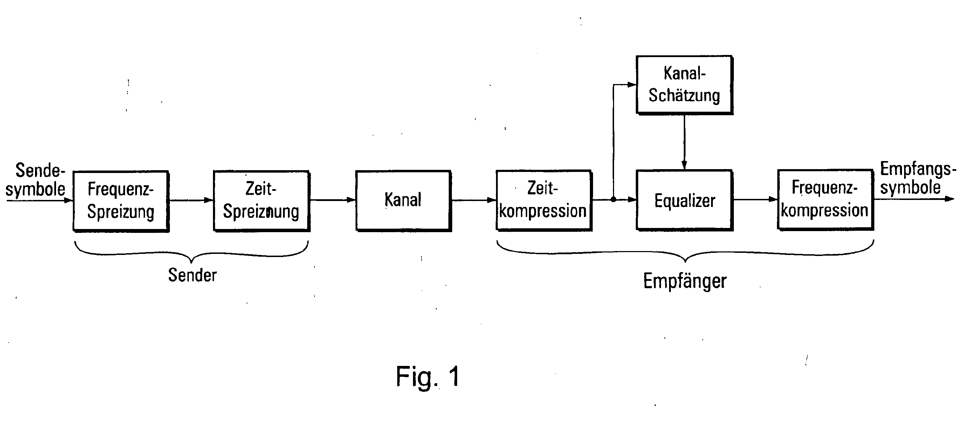

Figur 1 zeigt den vereinfachten Aufbau des erfindungsgemäßen Übertragungssystems. Die zu übertragenden Informationssymbole erfahren zunächst eine Frequenzspreizung. Bei zeitkontinuierlicher Signalverarbeitung geschieht dies zum Beispiel durch Umwandlung in Pseudodiracpulse mit anschließender Bandpaßfilterung. Bei zeitdiskreter Signalverarbeitung bewirkt beispielsweise die Operation der Hochtastung (Erhöhung der Abtastrate, "upsampling") eine Frequenzspreizung.

Im nächsten Schritt erfolgt die Zeitspreizung der frequenzgepreizten Symbole. Beispielsweise erfolgt dies durch Faltung mit einer Korrelationsfolge. Es folgt der Übertragungskanal, wobei evtl. vorhandene Modulations-, ZF- und HF-Stufen als Teil des Übertragungskanals angesehen werden. Das empfangene mit Störungen behaftete Signal durchläuft nun eine Zeitkompression zum Beispiel durch Faltung mit der zeitinvertierten konjugiert-komplexen Korrelationsfolge.

Die anschließend auftretenden Symbole ermöglichen eine gute Kanalschätzung, was wiederum den Einsatz bekannter Equalizer auch für hohe Symbolraten zuläßt. Im letzten Schritt erfolgt eine Frequenzkompression, die zum Beispiel durch ein Sample & Hold-Glied oder ein Integrate and Dump Glied realisiert wird.

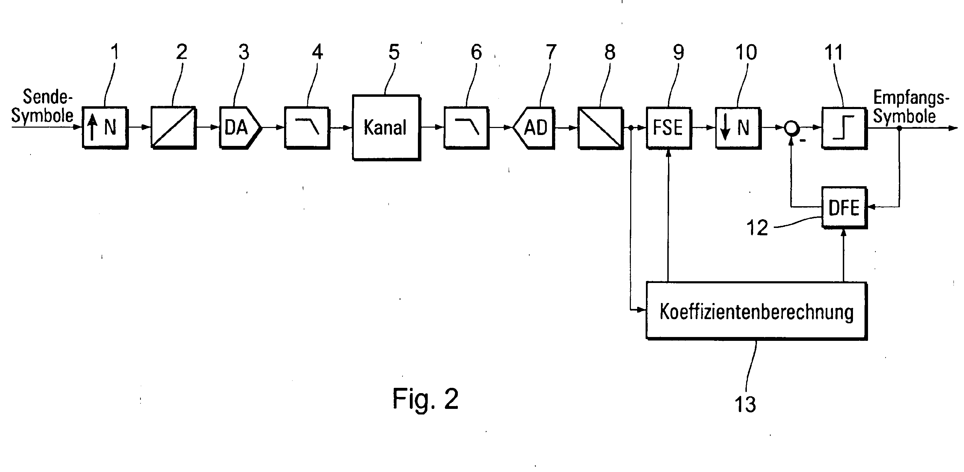

Ein (konkretes) Ausführungsbeispiel der Erfindung in digitaler und damit zeitdiskreter Signalverarbeitungstechnik ist in Figur 2 dargestellt. Ein Folge von Sendesymbolen, bei der jedes Element eine komplexe Zahl aus einem Symbolalphabet darstellt, liegt mit einem Symboltakt am Eingang der Anordnung. Diese Folge wird um den Faktor N hochgetastet 1 , indem die Abtastrate erhöht und mathematische Nullen (keine Information) eingefügt werden, was einer Frequenzspreizung entspricht. Die hochgetastete Folge durchläuft ein Sendefilter 2, dessen Impulsantwort der gewählten Korrelationsfolge entspricht. Physikalisch bedeutetet dies, daß jedes Symbol die komplette Korrelationsfolge multipliziert mit dem Symbolwert auslöst. Mathematisch entspricht dies der Faltung der hochgetasteten Folge mit der Korrelationsfolge, wobei eine Zeitspreizung des Einzelsymbols eintritt. Das resultierende Signal durchläuft einen Digitalanalog-Konverter 3 und anschließend einen Ausgangstiefpaß 4. Es folgt der Übertragungskanal 5, der in diesem Beispiel alle eventuell vorhandenen sonstigen Übertragungsglieder wie Verstärker-, Misch-, ZF- und HF-Stufen beinhalten möge.

Auf der Empfängerseite durchläuft das Signal zunächst einen Eingangstiefpaß 6 und anschließend einen Analogdigital-Konverter 7. Das digitalisierte Signal wird nun auf ein Empfangsfilter 8 geführt, das einen gegenüber dem Sendefilter 2 korjugiert komplexen Frequenzgang aufweist. Dadurch findet eine Zeitkompression statt. Für den Fall, daß auf der Sendeseite ein einzelnes Referenzsymbol ausgesendet wurde, erscheint am Ausgang des Empfangsfilters direkt und ohne zusätzlichen Aufwand die Kanalimpulsantwort.

Damit können sofort die Koeffizienten eines Entzerrers oder Equalizers. nach bekannten Algorithmen [K.D. Kammayer: Nachrichtenübertragung 2 Aufl, Stuttgart 1996, 181ff ...] berechnet werden 13. Im vorliegenden Beispiel wird ein "Fractional Spaced Equalizer', FSE, in Kombination mit einem "Decision-Feedback-Equalizer", DFE, eingesetzt [S. Qureshi: Adaptive Equalization, IEEE Communications Magazine, vol 20 March 1982, pp 9-16].

Das Signal durchläuft nun den FSE 9, der ein lineares Filter darstellt, wodurch ein Teil der Verzerrungen, die das Signal durch den Kanal erfahren hat, kompensiert werden. Anschließend wird das Signal um den Faktor N heruntergetastet 10. Die Heruntertastung ist eine Reduzierung der Abtastrate, bei der nur jeder N-te Werte weitergereicht wird. Schließlich folgt eine Entscheidungsstufe 11, in der enstchieden wird, um welches Symbol aus dem vereinbarten Alphabet es sich bei dem vorliegenden Symbol handelt. Diese Entscheidung wird schließlich in den DFE 12 zurückgekoppelt. Dadurch werden weitere Kanal-Verzerrungen in dem Signal kompensiert.

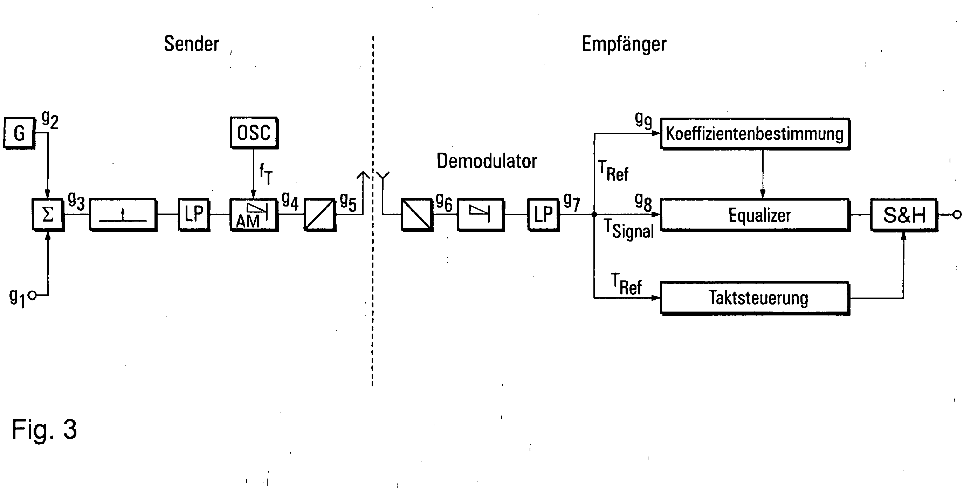

In einem weiteren Ausführungsbeispiel, dargestellt in Figur 3, werden Referenzsymbole zur Bestimmung der Kanaleigenschaften in einem speziellen Meßintervall dem zu übertragenden Datenpaket, bestehend aus Informationssymbolen, vorargestellt. Unter Anwendung der Kombination von Frequenz- und Zeitspreizverfahren werden die Referenz- und Informationssymbole zum Empfänger übertragen. Die im Meßintervall aufgrund der Mehrwegeausbreitung entstandenen Verzerrungen der Referenzsymbole werden aufgezeichnet, analysiert und direkt zur Bestimmung der Koeffizienten für den Equalizer verwendet.

Um die Kanalmessung mit der erforderlichen hohen Genauigkeit durchzuführen, müssen die Referenzsymbole mit einem hohen Signal zu Rausch-Verhältnis übertragen werden. Ferner müssen die Referenzsignale eine hohe Auflösung auf der Zeitachse haben, um die Phasenlage der Multipath-Anteile genau bestimmen zu können. Beiden Forderungen wird durch die frequenz- und zeitgespreizte Übertragung der Referenzsymbole entsprochen.

Als Korrelationsfolge zur Zeitspreizung und zur zeitlichen Kompression der Symbole wird im Beispiel ein Chirp-Impuls verwendet. Bei Chirp-Impulsen handelt es sich um linear frequenzmodulierte Impulse konstanter Amplitude der Dauer T, innerhalb derer sich die Frequenz von einer unteren zu einer oberen Frequenz stetig linear steigend oder fallend ändert. Die Differenz zwischen oberer und unterer Frequenz stellt die Bandbreite B des Chirp-Impulses dar.

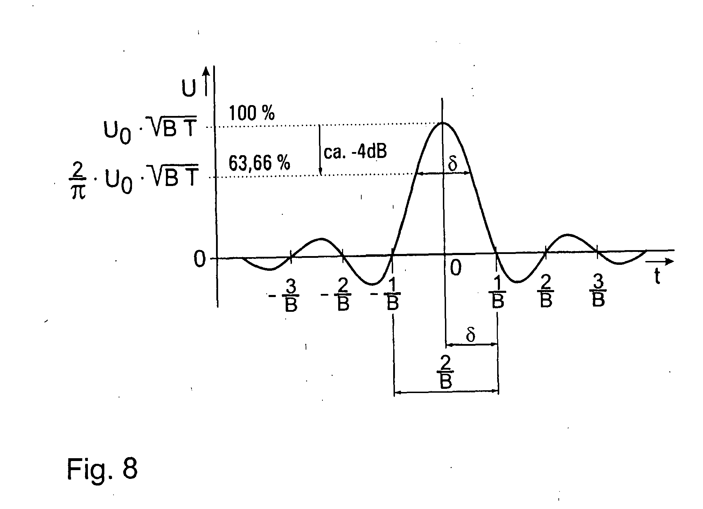

Die Gesamtdauer T dieses Impulses, multipliziert mit der Bandbreite B des Impulses, wird als Dehnungs- oder Spreizfaktor $\psi$ bezeichnet, es gilt: $\psi = B \cdot T$. Passiert ein derartiger Chirp-Impuls ein in der Frequenz-Laufzeit-Charakteristik entsprechend angepaßtes Filter, dann entsteht ein zeitlich komprimierter Impuls mit einer sinx/x-ähnlichen Hüllkurve (Figur 8), deren maximale Amplitude gegenüber der Eingangsamplitude um den Faktor $\sqrt{BT}$ überhöht ist.

Das heißt, das Verhältnis von Ausgangsspitzenleistung zu Eingangsleistung ist gleich dem BT-Produkt des Chirp-Impulses, der Grad der Überhöhung $P_{out\_max} / P_{in}$ ist bei gegebener Bandbreite durch die Impulsdauer T des Sendeimpulses frei einstellbar. Der komprimierte Impuls hat die volle Bandbreite B, seine mittlere Impulsdauer beträgt 1/B. Die erreichbare Zeitauflösung ist damit allein durch die Übertragungsbandbreite bestimmt. Zwei benachbarte komprimierte Impulse sind noch voneinander zu trennen, wenn sie einen Abstand von mindestens 1/B besitzen, das heißt, wenn die unkomprimierten Chirp-Impulse um genau diesen Abstand gegeneinander versetzt sind.

Der Vorgang der Kompression ist reversibel; ein Trägerfrequenzimpuls mit sinx/x-ähnlicher Hüllkurve kann mit einem dispersiven Filter geeigneter Frequenz-Gruppenlaufzeit-Charakteristik in einen Chirpimpuls annähernd konstanter Amplitude transformiert werden. Der sin x/x-ähnliche Impuls erfährt dabei eine zeitliche Spreizung um den Faktor BT.

Im Sender erzeugte, über einen störungsbehafteten Kanal übertragene und im Empfänger komprimierte Chirp-Impulse sind im S/N gegenüber unkomprimierten Signalen stark bevorteilt. Der besondere Vorteil, der Chirp-Signale (oder allgemein zeitgespreizte Signale) für Kanalmessungen prädestiniert, ist ihr Systemgewinn im Signal zu Rausch-Verhältnis durch die empfängerseitige zeitliche Kompression, der sich bei Angabe in dB zu 10 log (BT) errechnet.

Im folgenden Beispiel sollen Informationssymbole der Symbolrate D über einen Nachrichtenkanal der Bandbreite B übertragen werden.

Als Korrelationsfolge zur Zeitspreizung dient ein Chirp-Impuls der Länge T. Für jedes einzelne Symbol wird ein derartiger Chirp-Impuls, gewichtet mit dem Symbolwert, erzeugt. Ein Symbol wird demnach zeitlich auf eine Länge von T gespreizt. Der Abstand $\Delta t$ benachbarter Chirp-Impulse folgt dann direkt aus der Symbolrate D[baud] und beträgt $\Delta t = 1/D$. Abhängig von diesem Impulsabstand können sich die entstehenden Chirp-Impulse zeitlich überlappen. Die Anzahl n der Impulse, die sich zu einem Zeitpunkt überlappen, bestimmt sich als Quotient aus Chirp-Dauer T und Impulsabstand $\Delta t$.

Zur Übertragung der gespreizten Signale wird in einer Sendeperiode die maximal verfügbare Sendeleistung P ausgesendet. Diese Leistung teilt sich auf in die n-fach überlappenden Chirp-Impulse. Jeder einzelne Chirp-Impuls wird also mit einer Leistung von P/n übertragen.

Duch die zeitliche Kompression im Empfänger erfährt ein Chirp-Impuls eine Lestungsüberhöhung von $P_{out\_max} / P_{in} = B \cdot T$. Werden mit der Eingangsleistung $P_{in}$ n-fach überlappende Chirp-Impulse empfangen und komprimiert, dann beträgt die Spitzenleistung eines einzelnen Impulses $P_{out\_max} = P_{in} B \cdot T/n$.

Erfindungsgemäß wird für die zeitliche Spreizung der Informationssymbole und der Referenzsymbole (für die Kanalschätzung), dieselbe Korrelationsfolge eingesetzt. Um die im Meßintervall gesendeten Referenzsymbole gegenüber den Informationssymbolen des Datenpakets im S/N bevorzugt zu übertragen, genügt es, bei konstanter Spitzenleistung den Symbolabstand der Referenzsymbole so weit zu vergrößern, daß sich weniger Impulse überlappen, daß also der Wert n sinkt.

Ist der Impulsabstand $\Delta t$ gleich oder größer als die Chirp-Dauer T, dann wird ein Chirp-Impuls mit der vollen Sendeleistung P übertragen. Die Spitzenleistung nach empfängerseitiger Kompression beträgt dann: $P_{out\_max} = P_{in} \cdot B \cdot T$.

Im einfachsten Fall ist die Bedingung $\Delta t = T$ erfüllt, wenn im Meßintervall nur ein einziger Referenzimpuls gesendet wird. Im vorgestellten Beispiel werden zwei Referenzimpulse übertragen. Gezeigt wird, daß ihr zu wählender Abstand nicht nur von der Chirplänge, sondern zusätzlich vom erwarteten Delay Spread der Übertragungsstrecke abhängig ist.

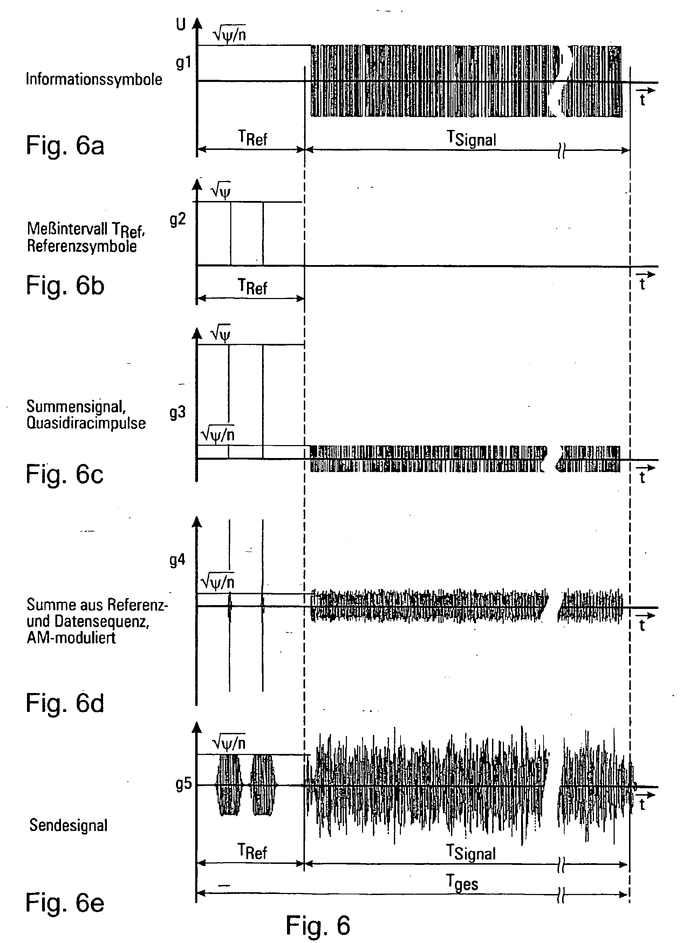

Das Eingangssignal g1 (siehe Figuren 3 und 6a) enthält die zu übertragenden Informationssymbole, die in Datenpaketen der Länge $T_{signal}$, zusammengefaßt sind. Im Beispiel ist g1 ein aus bipolaren Rechteckimpulsen bestehendes Signal.

Ein Impulsgenerator G generiert in dem mit $T_{Ref}$ bezeichneten Meßintervall eine Folge von (im Beispiel zwei) Referenzsymbolen g2, deren Position in Figur 6b dargestellt ist. Erzeugt werden rechteckförmige Impulse, die in der Impulsleistung gegenüber den Impulsen des Signalintervalls um den Faktor $n = D \cdot T$ erhöht sind. (D ist die Symbolrate im Signalintervall, T die Chirp-Dauer und n ist die Anzahl der sich nach der Zeitspreizung überlappenden Impulse im Signalintervall.)

Entsprechend dem zu erwartenden maximalen Delay Spread der Übertragungskanals wird der zeitliche Abstand beider Referenzsymbole mindestens so groß gewählt, daß die bei der Übertragung auftretenden Reflexionen des ersten Referenzsymbols im Intervall zwischen den Impulsen vollständig abgebildet werden können.

Da sich das Signalintervall $T_{signal}$ und das Meßintervall $T_{Ref}$ nicht überlappen, können das Eingangssignal g1 und das Referenzsignal g2 mit Hilfe eines Summationsgliedes überlagerungsfrei addiert werden.

Das Summensignal g3 wird anschließend einem Impulsformer zugeführt, der jeden Rechteckimpuls des Summensignals in einen Quasidiracimpuls gleicher Energie umwandelt und damit die eigentliche Frequenzspreizung vornimmt. Die entstandene Folge von Nadelimpulsen (Figur 6c) wird einem Tiefpaßfilter zugeführt und damit auf die halbe Übertragungsbandbreite bandbegrenzt. Das Laufzeitverhalten des Tiefpaßfilters weist kurz vor der Grenzfrequenz eine Überhöhung auf, so daß die einzelnen Nadelimpulse jeweils in si-Impulse transformiert werden, deren Form der bekannten si-Funktion $si(x) = \sin(x)/x$ entspricht.

Im Anschluß daran wird die si-Impulsfolge einem Amplitudenmodulator (ausgeführt z.B. als Vierquadranten-Multiplizierer) zugeführt, der diese Signale auf eine Trägerschwingung der Frequenz $f_T$ aufmoduliert, die von einem Oszillator erzeugt wird, so daß am Ausgang des Amplitudenmodulators, wie in Figur 6d dargestellt, Trägerfrequenzimpulse mit einer impulsweise si-förmigen Hüllkurve erzeugt werden. Das Ausgangssignal des Amplitudenmodulators hat die Bandbreite des Übertragungskanals. Anders ausgedrückt: Die Folge aus Referenz- und Informationssymbolen hat eine Frequenzspreizung auf die volle Kanalbandbreite erfahren.

Die auf diese Weise erzeugten Impulse haben im Übertragungsfrequenzbereich ein annähernd rechteckförmiges Leistungsdichtespektrum. Deshalb können die Referenzimpulse des Meßintervalls in idealer Weise als Testsignal zur Bestimmung der Impulsantwort des Kanals verwendet werden.

Dem Amplitudenmodulator ist ein Dispersionsfilter (Chirp-Filter) nachgeschaltet, welches das modulierte Trägersignal g4 entsprechend seiner frequenzabhängigen differentiellen Laufzeitcharakteristik filtert (Zeitspreizung). Dieser Vorgang entspricht der Faltung des Trägersignals mit der Gewichtsfunktion des Chirp-Filters. Im Ergebnis dieser Operation wird jeder einzelne der Trägerfrequenzimpulse in einen Chirp-Impuls transformiert und damit auf der Zeitachse gespreizt (Figur 6e). Im Meßintervall erscheinen die von Überlagerungen freien Referenz-Chirp-Impulse jeweils mit der gleichen Leistung, die im Signalintervall zur Übertragung von n überlappenden Chirp-Impulsen aufgewendet wird. Gegenüber einem Einzelimpuls des Datenpaketes werden sie also mit n-facher Leistung erzeugt und damit mit einem um den Faktor n besseren Signal- zu Rausch-Verhältnis übertragen.

Das Ausgangssignal des dispersiven Filters wird über den Nachrichtenkanal zum Empfänger übertragen. Mit zum Nachrichtenkanal gerechnet werden hier auch alle sonstigen Übertragungsglieder wie Sendeendstufe, Empfangsfilter, Empfangsverstärker usw.

Das Empfangssignal g6, das die Chirp-Impulse des Meßintervalls und des Datenpakets sowie die Reflexionen dieser Impulse enthält, passiert ein dispersives Filter, dessen frequenzabhängige differentielle Gruppenlaufzeitcharakteristik komplementär zur Charakteristik des senderseitigen dispersiven Filters ist. Dabei werden die einzelnen Chirp-Impulse zeitlich komprimiert, d.h. in Trägerfrequenz-impulse mit $\sin(x)/x$-ähnlicher Hüllkurve umgewandelt.

Da die überlagerten Reflexionen der übertragenen Chirp-Impulse wiederum Chirp-Impulse sind, das heißt, die gleiche Frequenz-Zeit-Charakteristik aufweisen, werden auch sie in der gleichen Weise komprimiert.

Das Ausgangssignal des dispersiven Filters wird anschließend einem Demodulator und einem nachgeschalteten Tiefpaßfilter zugeführt, der das Signal von der hochfrequenten Trägerschwingung befreit. Am Ausgang des Tiefpasses liegt das komprimierte und demodulierte Signal g7 vor, dem infolge der Mehrwegeausbreitung Störungen überlagert sind.

In dem sich anschließenden Block "Koeffizientenbestimmung" werden die Signale im Meßintervall $T_{Ref}$ ausgewertet. Innerhalb dieses Intervalls liegt das komprimierte und demodulierte Referenzsignal inklusive der überlagerten Multipath-Reflexionen vor. Zur Kanalschätzung steht damit ein Echogramm zur Verfügung, das die auf dem Übertragungsweg überlagerten Reflexionen mit $\sin(x)/x$-förmigen Nadelimpulsen abbildet.

Die ermittelte Impulsantwort des Übertragungskanals wird dem Equalizer übergeben, der die innerhalb der Signalperiode $T_{Signal}$ den Informationssymbolen überlagerten Reflexionsanteile kompensiert. Das Ausgangssignal des Equalizers wird an eine Sample-and-Hold-Stufe geführt. Damit wird dieses Signal im Frequenzbereich wieder entspreizt. Im Ergebnis dieses Vorgangs liegen die übertragenen Symbole wieder in Form von Rechteckimpulsen vor.

Aufgrund ihrer hohen zeitlichen Auflösung und der besonders gegen Störungen gesicherten Übertragung können die demodulierten Referenzimpulse auch zur Taktsteuerung des Empfängers herangezogen werden.

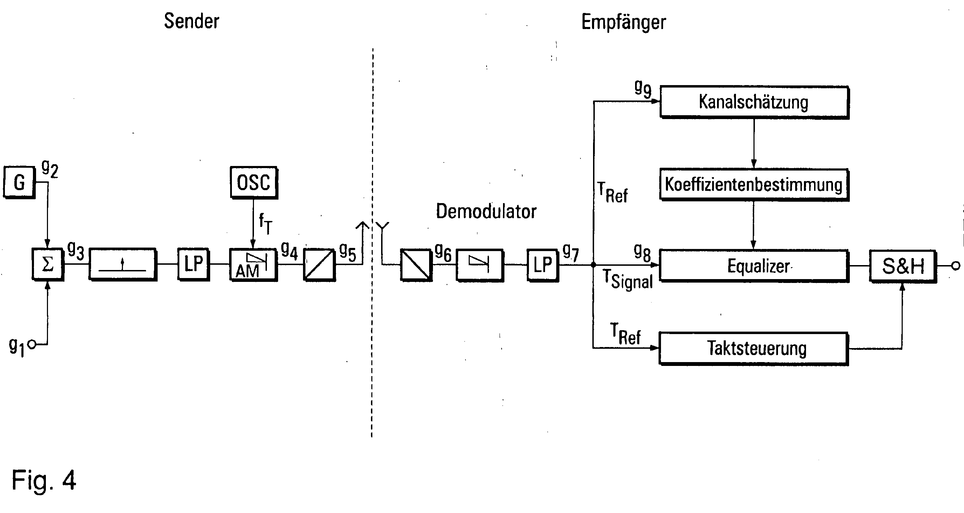

In einer weiteren Variante (Figur 4) wird vor der Koeffizientenbestimmung noch ein zusätzlicher Block "Kanalschätzung" eingefügt, der die Reaktion des Kanals auf die Referenzsymbole einem zusätzlichen mathematischen Algorithmus unterzieht mit dem Ziel, die Impulsantwort des Kanals noch genauer zu bestimmen.

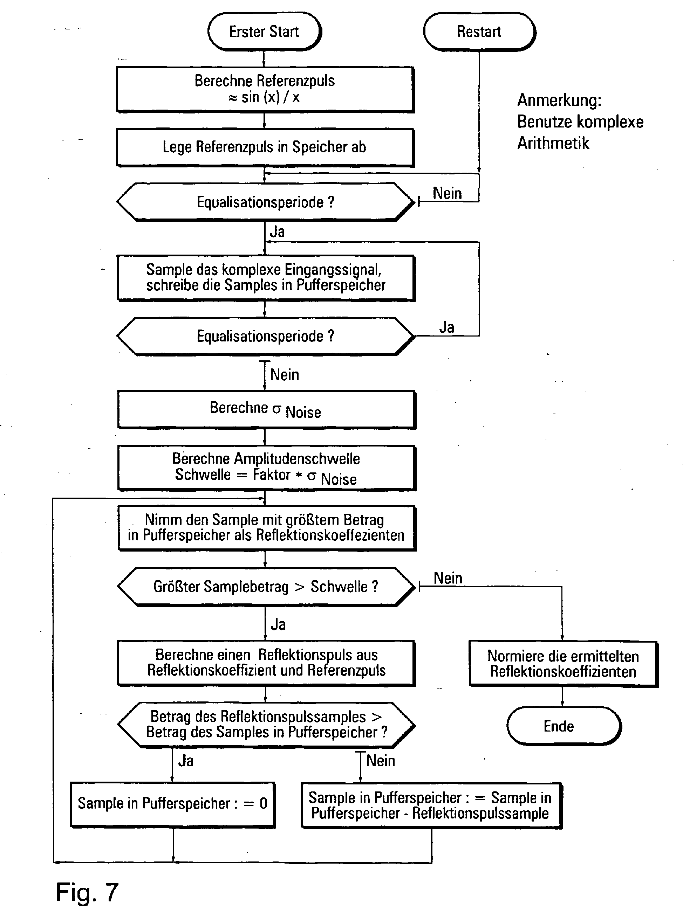

Ein möglicher Algorithmus zur Kanalschätzung ist in Figur 7 in Form eines Flußdiagramms dargestellt. Im Gegensatz zu bekannten Algorithmen handelt es sich hierbei um eine "parametrische" Kanalschätzung. Das heißt, es werden diskrete Mehrwegechos detektiert und deren jeweilige Parameter Amplitude, Phase und Zeitpunkt, im folgenden "Reflexionskoeffizienten" genannt, geschätzt.

Nach dem ersten Start wird zunächst die bekannte Pulsform eines unverzerrten Symbols berechnet und in einem Speicher abgelegt. Im nächsten Schritt wird der Beginn einer Equalisationsperiode abgewartet. Während der Equalisationsperiode wird das Eingangssignal in einem Pufferspeicher abgelegt. Nach der Equalisationsperiode wird der Pufferspeicherinhalt ausgewertet. Zuerst wird die Standardabweichung des Rauschens ermittelt, indem das Signal vor einem oder mehreren in der Equalisationsperiode enthaltenen Symbolen als Rauschen interpretiert wird. Aus dieser Standardabweichung wird eine Amplitudenschwelle berechnet.

Nun beginnt eine Schleife:

1. Suche den Sample mit maximalem Betrag im Pufferspeicher und intepretiere ihn als Reflexionskoeffizienten.

2. Prüfe ob dieser Wert über der Schwelle liegt.

3.a Wenn ja, berechne einen Reflexionspuls, dessen Betrag, Phase und Zeitpunkt durch den Reflexionskoeffizienten bestimmt wird, während seine Form durch den Referenzpuls gegeben ist.

3.b Wenn nein, beende die Schleife; normiere die bis jetzt gefundenen Reflexionskoeffizienten bezüglich des Reflektionskoeffizienten mit maximalem Betrag und liefere diese als Ergebnis zurück.

4. Subtrahiere den berechneten Reflexionspuls sampleweise vom Pufferspeicherinhalt. Sofern der Betrag eines Samples des Reflexionspulses größer ist als der Betrag des zeitlich korrespondierenden Samples im Pufferspeicher, schreibe die Differenz der Samples in den Speicher, andernfalls schreibe an dieser Stelle eine Null in den Pufferspeicher.

Beginne wieder bei 1.

Während einer Equalisationsperiode werden ein oder mehrere Referenzsymbole übertragen. Im einfachsten Fall wird das zeitkomprimierte Signal h(t) eines Referenzsymbols als Schätzung der Kanalimpulsantwort interpretiert. Eine auf Grund von vermindertem Rauschen verbesserte Schätzung der Kanalimpulsantwort erhält man, indem man eine Mittelung über mehrere Referenzsymbole durchführt. Ebenfalls zur Rauschunterdrückung ist eine Schwellwertfilterung naheliegend. Dabei wird die schwellwertgefilterte Kanalimpulsantwort $h_{Sch}(t)$ überall dort, wo der Betrag von h(t) kleiner als eine zu bestimmende Amplitudenschwelle ist, als Rauschen interpretiert und zu Null gesetzt. Die Schwelle wird beispielsweise als ein festgelegter Bruchteil der maximalen oder mittleren Signalamplitude gewählt. Eine andere Möglichkeit besteht darin, die Schwelle so zu wählen, daß das Signal nach der Schwellwertbildung noch einen festen Anteil (beispielsweise 95%) seiner Energie enthält.

Um mittels Quadraturamplitudenmodulation QAM im ZF oder HF Bereich ein Chirp-Signal mit linear ansteigender Frequenz zu erzeugen, ist ein komplexes Basisbandsignal der Form

$$z(t) = \begin{cases} Z_0 \cdot \exp(j \cdot \dfrac{\pi \cdot B \cdot t^2}{T}) & \text{für} \quad |t| \le \dfrac{T}{2} \\ 0 & \text{sonst} \end{cases}$$

geeignet. Dabei ist B die Bandbreite des Chirp-Signals, T die Zeitdauer und $Z_0$ ist eine zu übertragende Information, die für die Dauer des Chirp-Signals als Konstante betrachtet wird. Durch Abtastung mit der Abtastfrequenz fs ergibt sich eine Chirpfolge aus N Punkten:

$$z(n) = \begin{cases} Z_0 \cdot \exp(j \cdot \pi \cdot \dfrac{B}{fs \cdot N} \cdot n^2) & \text{für} \quad |n| \leq \dfrac{N}{2} \\ 0 & \text{sonst} \end{cases}$$

Das Signal z(t) stellt somit ein Chirp-Signal dar, das in der Anordnung nach Figur 1 verwendet werden kann. Weiterhin stellt z(n) eine Chirpfolge dar, die als Korrelationsfolge in der Anordnung nach Figur 2 verwendet werden kann, Die Folge z(n) ist im vorliegenden Fall eine uniforme, polyphasige komplexe Folge, was jedoch keine notwendige Bedingung für ihre Anwendung in der Anordnung nach Figur 2 ist.

In Übertragungssystemen ist es Stand der Technik, die zu übertragenden Symbole zwecks Pulsformung einer Filterung mit einem Raised-Cosine-Rolloff-Filter zu unterziehen. Dadurch wird gewährleistet, daß die Symbole nach der Übertragung die erste Nyquistbedingung erfüllen, wodurch sichergestellt ist, daß keine störenden Intersymbolinterferenzen auftreten. Es ist weiterhin üblich, das Raised-Cosine-Rolloff-Filter auf Sender und Empfänger aufzuteilen, indem beispielsweise jeweils ein Filter mit einer Wurzel-Raised-Cosine-Rolloff-Charakteristik verwendet wird. Entscheidend ist dabei, daß die resultierende Übertragungungsfunktion aller Elemente des Übertragungsweges der aus der gewünschten Symbolrate resultierenden Raised-Cosine-Rolloff-Charakteristik entspricht.

Ein großer Vorteil von linearen Chirp-Signalen liegt nun darin, daß auf einfache Weise ein beliebiger Frequenzgang, also auch eine Wurzel-Raised-Cosine-Rolloff-Charakteristik, aufgeprägt werden kann, indem das Signal im Zeitbereich mit dem gewünschten Frequenzgang multipliziert, also gewichtet wird. Dies ist möglich, weil bei dem linearen Chirp jeder Zeitpunkt auch genau einem Frequenzpunkt entspricht. Der genaue Zusammenhang f(t) zwischen Zeitpunkt und Frequenzpunkt ergibt sich aus der Ableitung der Phase des Chirp-Signals.

Eine Folge der Form

$$z(n) = \begin{cases} Z_0 \cdot \exp(j \cdot \pi \cdot \dfrac{B}{fs \cdot N} \cdot n^2) \cdot W(f(n)) & \text{für} \quad |n| \leq \dfrac{N}{2} \\ 0 & \text{sonst} \end{cases}$$

stellt also eine gewichtete Chirpfolge dar. Die Wichtungsfunktion W(f) ist die gewünschte Frequenzcharakteristik, also beispielsweise die bekannte Wurzel-Raised-Cosine-Rolloff-Charakteristik.

Die Funktion f(n) beschreibt hier den Zusammenhang zwischen momentanem Zeitpunkt und Momentanfrequenz. Für die hier verwendete Chirpfolge gilt:

$$f(n) = 2 \cdot \pi \cdot \frac{B}{fs} \cdot \frac{n}{N}$$

Bei der Verwendung von Korrelationssignalen und insbesondere Chirp-Signalen ist es also möglich, die ohnehin notwendige Pulsformungsfilterung bereits vor der Übertragung durchzuführen, indem das Korrelationssignal entsprechend vorgefiltert bzw. das Chirp-Signal entsprechend gewichtet wird. Der Nachteil des erhöhten Rechenaufwandes für die Verarbeitung von Korrelationssignalen wird damit mehr als ausgeglichen.

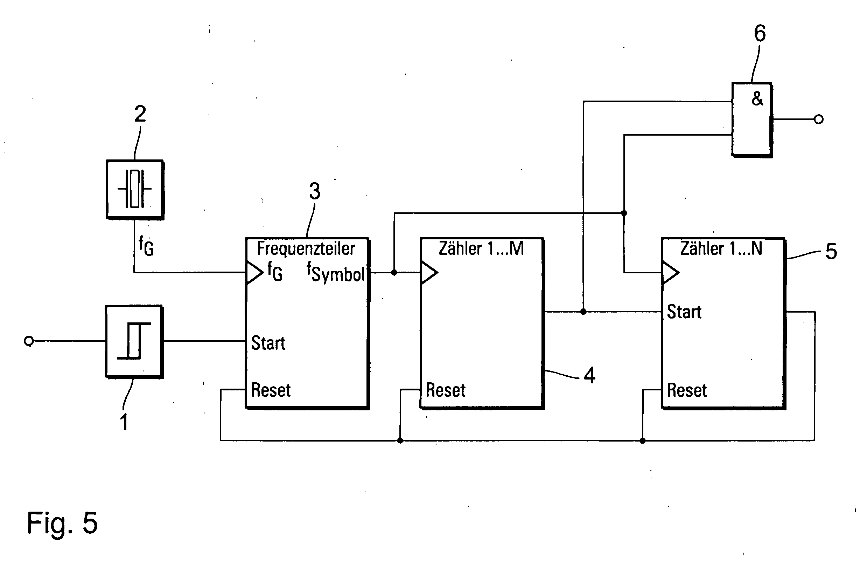

Da die Referenzsymbole vorzugsweise überlappungsfrei gesendet werden, haben sie nach der zeitlichen Kompression eine hohe Amplitude. Sie können daher mit einfachen Mitteln zeitlich präzise detektiert werden. Dies eröffnet die Möglichkeit, die Taktsteuerung des Empfängers direkt aus den Referenzsymbolen abzuleiten. Figur 5 zeigt eine Anordnung, die dieses ermöglicht. Dabei wird von dem einfachen Fall ausgegangen, daß auf jeweils ein Referenzsymbol nach einem Zeitintervall von M Symboltakten ein Paket aus N informationssymbolen folgt.

Zunächst wird das Referenzsymbol mittels eines Komparators 1 detektiert. Das Auftreten eines Referenzsymbols löst die Freigabe eines Frequenzteilers 3 aus. Am Eingang des Frequenzteilers liegt das Signal eines Oszillators 2, dessen Frequenz ein Vielfaches des Symboltaktes beträgt. Am Ausgang des Frequenzteilers steht nun der Symboltakt. Die Phase des Symboltaktes wird durch den Freigabezeitpunkt bestimmt. Der Phasenfehler des Symboltaktes ist erwartungsgemäß klein , da er nur von der Zeitgenauigkeit des Freigabezeitpunktes abhängt.

Ein Zähler 1 ... M 4 zählt die bekannte Anzahl M von Symboltakten, die zwischen dem Referenzsymbol und dem ersten Informationssymbol liegt. Ein Zähler 1 ... N 5 zählt die bekannte Anzahl von Symboltakten N, die zwischen dem ersten Informationssymbol und dem letzten Informationssymbol liegt. Zähler 1 ... M und Zähler 1 ... N sind "Einmal"-Zähler, die sobald sie ihren Endwert erreicht haben in ihrem momentanen Zustand verharren, bis sie durch ein RESET-Signal zurückgesetzt werden.

In dem Zeitintervall, in dem Zähler 1 ... N aktiv ist, liegt am Ausgang des Ausgangsors . 6 ein Signal, mit dessen Flanken alle Informationssymbole präzise gesampelt werden können. Sobald Zähler 1 ... N seinen Endwert erreicht hat, wird die Anorchung in den Ursprungszustand zurückgesetzt und wartet auf die Aktivierung durch das nächste Referenzsymbol.

Die vorliegende Erfindung kombiniert zur Übertragung von Nachrichtensignalen ein Frequenz- mit einem Zeitspreizverfahren. Um eine bestmögliche spektrale Ausnutzung des Übertragungskanals zu erreichen, werden die zu übertragenden Symbole frequenzgespreizt. Zum Unterschied von anderen Frequenzspreizverfahren erfolgt die Frequenzspreizung hier nicht durch symbolweise Multiplikation mit einer Code-Folge, sondern durch Hochtastung bzw. Quasidirac-Impulsformung mit anschließender Filterung.

Im Ergebnis der Frequenzspreizung hat jeder einzelne der zu übertragenden Impulse eine annähernd rechteckige spektrale Leistungsdichte über dem gesamten Frequenzbereich der Übertragung. Durch diese Breitbandigkeit sind die frequenzgespreizten Signale robust gegen schmalbandige Störungen.

Ein wichtiges Merkmal der Erfindung besteht ferner darin, daß die frequenzgespreizten Symbole der gesamten Sendeperiode (also Referenz- und Informationssymbole) vor der Übertragung zusätzlich zeitgespreizt werden. Durch diese Zeitspreizung wird die Impulsenergie der einzelnen Symbole über einen längeren Zeitraum verteilt. Die Übertragung wird dadurch robuster gegen kurzzeitige Störungen. Die derart zeitgespreizten Symbole werden im Empfänger wieder zeitlich komprimiert.

Durch diese Kompression ergibt sich ein Systemgewinn im Signal zu Rausch-Verhältnis, der direkt vom Maß der zeitlichen Spreizung abhängig ist. Wegen des rechteckförmigen Leistungsdichtespektrums eignen sich die frequenzgespreizten Symbole besonders gut als Testsignale zur Bestimmung der Kanaleigenschaften.

In einem speziellen Meßintervall zur Kanalschätzung werden deshalb frequenzgespreizte Symbole ausgesendet, um den Kanal im gesamten Frequenzbereich mit gleicher Intensität anzuregen. Die Impulsantwort des Kanals wird im Empfänger aufgezeichnet und als Eingangsgröße zur Echokompensation verwendet.

Bei Übertragung mit hohen Symboldatenraten über störungsbehaftete Nachrichtenkanäle setzt die Kompensation der Mehrwege-Verzerrungen eine sehr genaue Bestimmung der Kanalparameter voraus. Bedingung dafür ist eine besonders gegen Störungen gesicherte Übertragung der Referenzsymbole. Das bedeutet, daß sie gegenüber den Informationssymbolen mit erhöhter Leistung ausgesendet werden müßten. In leistungsbegrenzten Systemen aber wird innerhalb einer Sendeperiode stets mit der gleichen maximalen Leistung gesendet. Durch die symbolweise Spreizung können sich die übertragenen Informationssymbole abhängig von der Symbolrate und der Länge der Spreizfolge mehr oder weniger stark überlappen, so daß sich die abgegebene Sendeleistung stets auf mehrere Symbole aufteilt. Die im Meßintervall übertragenen Referenzsymbole zur Kanalschätzung dagegen werden erfindungsgemäß so positioniert, daß sie von Überlappungen frei sind, sie werden demnach mit der vollen Sendeleistung übertragen. Sie sind also leistungsmäßig gegenüber den einzelnen Informationssymbolen überhöht und erscheinen im Empfänger mit einem erhöhten S/N.

Sowohl die Referenzsymbole zur Kanalschätzung als auch die Informationssymbole durchlaufen im Sender eine gemeinsame Vorrichtung, in der zunächst die Frequenzspreizung und anschließend eine Zeitspreizung vorgenommen wird. Entsprechend ist auch der Empfänger ausgelegt, der zuerst die zeitliche Korrpression und anschließend die Entspreizung im Frequenzbereich vornimmt.

Die Übermittlung der Referenzsymbole ist also in sehr einfacher Weise in die Datenübertragung integriert. Benötigt werden zur Bestimmung der Kanalparameter keine zusätzlichen speziellen Sende- oder Empfangsmodule, aufwendige Filtervorrichtungen oder zusätzliche Korrelatoren.

Die verwendeten Spreizverfahren entfalten ihre Vorteile (hohe Störsicherheit gegen schmal- und breitbandige Störungen) bereits bei der reinen Informationsübertragung. Durch die zusätzliche Verwendung zur Bestimmung der Kanalparameter werden diese Vorteile in besonderer Weise gebündelt.

Vorstehend wurde beschrieben - beispielsweise anhand der Figur 3 - ein Chirp-Signal als Korrelationssignal zu verwenden. Ein Chirp-Signal als solches ist bekannt und es sei hier lediglich noch einmal auf die wesentlichen Eigenschaften eines Chirp-Impulses bzw. eines Chirp-Signals hingewiesen. Chirp-Impulse sind linear frequenzmodulierte Impulse konstanter Amplitude der Dauer T, innerhalb derer sich die Frequenz zwischen einer unteren und einer oberen Frequenz stetig linear steigend oder fallend ändert. Die Differenz zwischen oberer und unterer Frequenz stellt die Bandbreite des Chirp-Impulses dar. Die Gesamtdauer T des Impulses, multipliziert mit der Bandbreite B des Impulses wird als Dehnungs- oder Spreizfaktor bezeichnet. Figur 8 zeigt die Hüllkurve eines komprimierten Impulses, der entsteht, wenn ein Chirp-Impuls ein dispersives Filter, dessen Phasengang parabelförmig und dessen Gruppenlaufzeitverhalten linear ist, passiert.

Vorstehend wurde die Signalaufbereitung durch Frequenz- und Zeitspreizung beschrieben. Diese Kombination der Frequenz- und Zeitspreizung bietet besondere Vorteile in der Unterdrückung von Störungen auf dem Übertragungsweg. Hervorzuheben ist, daß sowohl die Frequenz- als auch die Zeitspreizung gut in Hochgeschwindigkeitsverfahren zur Datenübertragung mit Grenzdatenraten integrierbar sind. Wird mit höchsten Datenraten übertragen, dann wird zur Unterdrückung von Multipath-Effekten eine leistungsfähige Equalisation benötigt. Die Voraussetzung dafür ist die beschriebene Kanalschätzung.

Nachfolgend wird nun beschrieben, wie die Methoden der Frequenzspreizung und Zeitspreizung auf eine neue Weise in ein Mehrfachzugriffssystem eingebracht werden können, bei dem das vordringliche Ziel verfolgt wird, nämlich die höchste Flexibilität der Teilnehmer-Zugriffe bei jeweils maximal möglicher Störsicherheit zu gewährleisten.

Die für die Übertragung verfügbaren Kanalressourcen sind die Kanalbandbreite B und die maximal erreichbare (oder erlaubte) Sendeleistung P. Besonders dann, wenn ein Point-zu-Multipoint-System etabliert werden soll, kommt es darauf an, die Kanalressourcen effektiv zu verwalten. Dabei geht es nicht um eine einmalige Optimierung und Justage, wie etwa beim Aufbau einer Richtfunkstrecke, sondern um eine dynamische Anpassung an Bandbreitenanforderungen der einzelnen Teilnehmer unter ebenfalls veränderlichen Umweltbedingungen.

Das erfindungsgemäße Zugriffssystem ist in der Lage, unter den folgenden Betriebsbedingungen zu arbeiten:

- unterschiedliche Datenraten von Teilnehmer zu Teilnehmer, asymmetrische Datenraten
- veränderliche Umgebungseinflüsse (Rauschen, Störsignale)
- unterschiedliche und veränderliche Multipath-Bedingungen für verschiedene Teilnehmer
- unterschiedliche, gegebenenfalls variable Entfernungen der Teilnehmer zur Basisstation
- variable Verkehrsdichte
- Auch die BER-Anforderungen (BER = Bitfehlerrate) sind für die verschiedenen Teilnehmer unterschiedlich, abhängig von der Natur der zu übertragenden Daten (Sprache, Musik, Video, Online Banking etc.). Das System sollte also auch gewährleisten, daß die von jedem Teilnehmer je nach Art der zu übertragenden Daten geforderten Bitfehlerraten in jedem Fall eingehalten werden.

Ein Übertragungssystem, das auf derart viele veränderliche Größen reagieren und gleichzeitig akzeptable individuelle Bitfehlerraten garantieren soll, verlangt erfindungsgemäß eine höchstmögliche Flexibilität und gleichzeitig die Aktivierung aller Frequenz- und Leistungsreserven des Kanals - kurz: die vollständige Ausnutzung der Kanalressourcen zu jedem Zeitpunkt.

Erfindungsgemäß wird hierzu ein (Zugriffs-)System vorgeschlagen, das den verschiedenen Teilnehmer-Stationen eine Datenverbindung zur Verfügung stellt, deren Kenngrößen (BER, Datenrate, Sendeleistung) auf die individuellen Anforderungen des Teilnehmers abstimmbar sind. Zusätzlich sollte gewährleistet sein, daß das Übertragungssystem diese Kenngrößen selbsttätig an veränderte Übertragungs- und Verkehrsbedingungen anpassen kann.

Das erfindungsgemäße Zugriffssystem kombiniert zur Übertragung von Nachrichten eine variable Frequenzspreizung, eine variable Zeitspreizung, eine variable teilnehmerabhängige Sendeleistung und ein variables TDMA-Multiplex-Raster miteinander.

Die Einstellung dieser Parameter dient unmittelbar der flexiblen und adaptiven Reaktion auf variable Teilnehmeranforderungen, die Übertragungsdatenrate und die BER betreffend. Berücksichtigt wird im Ressourcen-Management, daß die unterschiedlichen Teilnehmer verschiedene Entfernungen zur Basisstation haben und daß für die einzelnen Übertragungspfade unterschiedliche Umweltbedingungen (Störungen, Multipath-Effekte, Rauschen) gelten. Das erfindungsgemäße Zugriffssystem bietet die Möglichkeit zur Unterdrückung von Rausch- und anderen Störsignalen.

Die Größen Frequenzspreizung, Zeitspreizung, Sendeleistung (pro Informationssymbol) und TDMA-Rasterung können dabei dynamisch an das Verkehrsaufkommen, an sich ändernde Übertragungsbedingungen angepaßt werden. Sie sind zu einem gewissen Grade unabhängig voneinander einstellbar, das heißt, dimensionierbar.

Die Methoden zur Zeit- und Frequenzspreizung können in Kombination mit den verschiedensten Mehrfachzugriffsverfahren eingesetzt werden, beispielsweise in TDMA-, in FDMA-Systemen oder in einer Kombination von TDMA mit FDMA.

Das TDMA-Zugriffsverfahren gestattet den Betrieb mit variabler Symbolrate für den Einzelteilnehmer, es erlaubt die Kommunikation mit asymmetrischen Datenraten. Über die Variationen von Time-Slot-Längen (Zeitschlitzlängen) kann ein TDMA-System in bekannter Weise auf wechselnde Teilnehmerdichten (bzw. Bandbreitenanforderungen) reagieren. In engem Zusammenhang mit diesen Eigenschaften zu sehen ist die Möglichkeit, die Übertragungsqualität teilnehmerbezogen so einzustellen, daß eine bestimmte geforderte Bitfehlerrate (BER) nicht überschritten wird (BER on demand).

Eine Darstellung des Zusammenwirkens von Frequenzspreizung, Zeitspreizung, Variation der Datenrate, der TDMA-Zeitschlitzlänge und der Sendeleistung wird nachfolgend beschrieben.

Das erfindungsgemäße Verfahren ist ein Mehrfachzugriffsverfahren mit teilnehmerbezogen variablen Datenraten und Sendeleistungen, unter Einsatz eines adaptiven Verfahrens zur frequenz- und zeitgespreizten Übertragung der Informationssymbole mit den folgenden Merkmalen:

- TDMA-Rahmen mit variablem Multiplex-Raster
  In der Grundstruktur ist das erfindungsgemäße Zugriffsverfahren wie ein TDMA-Verfahren ausgeführt. Die Teilnehmer-Trennung erfolgt auf der Zeitachse. In den bekannten TDMA-Systemen (beispielsweise DECT) ist es üblich, ein festes Multiplexraster vorzusehen, und auf erhöhte Datenraten-Anforderungen mit dem Zusammenlegen mehrerer Time-Slots zu reagieren, die dann einem Teilnehmer zugewiesen werden.
  Der im erfindungsgemäßen Zugriffsverfahren verwendete TDMA-Rahmen besitzt keine feste Slot-Anzahl bzw. festgelegte Slot-Breiten. Das Multiplex-Raster verändert sich mit der Anzahl und den Datenraten-Anforderungen der angemeldeten Teilnehmer.

- Variable Frequenzspreizung
  Um eine höchstmögliche Störsicherheit der Übertragung zu erreichen, werden die in den Zeitschlitzen übertragenen Informationssymbole auf die Kanalbandbreite frequenzgespreizt.
  Die Frequenzspreizung läuft in zwei Schritten ab:

    - Quasidirac-Impulsformung für jedes einzelne Symbol, unabhängig von der Symbolrate (diese Operation wird im Basisband durchgeführt und kann als die eigentliche Frequenzspreizung angesehen werden).
    - Bandpaßfilterung der Quasidirac-Folge

  Mit der Bandpaßfilterung wird die Frequenzspreizung abgeschlossen. Erreicht wird die Begrenzung des Signalspektrums auf die Bandbreite B des Übertragungskanals. Ein Einzelsymbol besitzt dann ein rechteckförmiges Leistungsdichtespektrum im gesamten verfügbaren Frequenzbereich. Im Zeitbereich stellt sich der Symbolfluß als Abfolge sin(x)/x-förmiger -Impulse dar. Die mittlere Breite $\delta$ eines derartigen Impulses ist durch die Kanalbandbreite B festgelegt und bestimmt sich zu $\delta = 1 / B$.

Bestehen vor der Spreizung Frequenzreserven, das heißt, ist der Quotient aus Kanalbandbreite und Teilnehmer-Symbolrate größer als Eins, dann resultiert aus der frequenzgespreizten Übertragung ein Systemgewinn im Signal-zu Rauschverhältnis. Dieser Systemgewinn wird im Empfänger durch Frequenzkompression realisiert. Damit verbunden ist eine Verringerung der Bitfehlerrate. Der Systemgewinn läßt sich durch Variation der betreffenden Symbolrate steuern. Eine Verringerung der Symbolrate bei konstanter Kanalbandbreite führt automatisch zu einer stärkeren Frequenzspreizung, das heißt zu einem höheren Systemgewinn und also zu einer größeren Resistenz gegen Rausch- und Schmalbandstörungen.

Letztlich erlaubt die variable Frequenzspreizung das Einstellen einer bestimmten vom Teilnehmer geforderten Bitfehlerrate auch unter sich ändernden Übertragungsbedingungen.

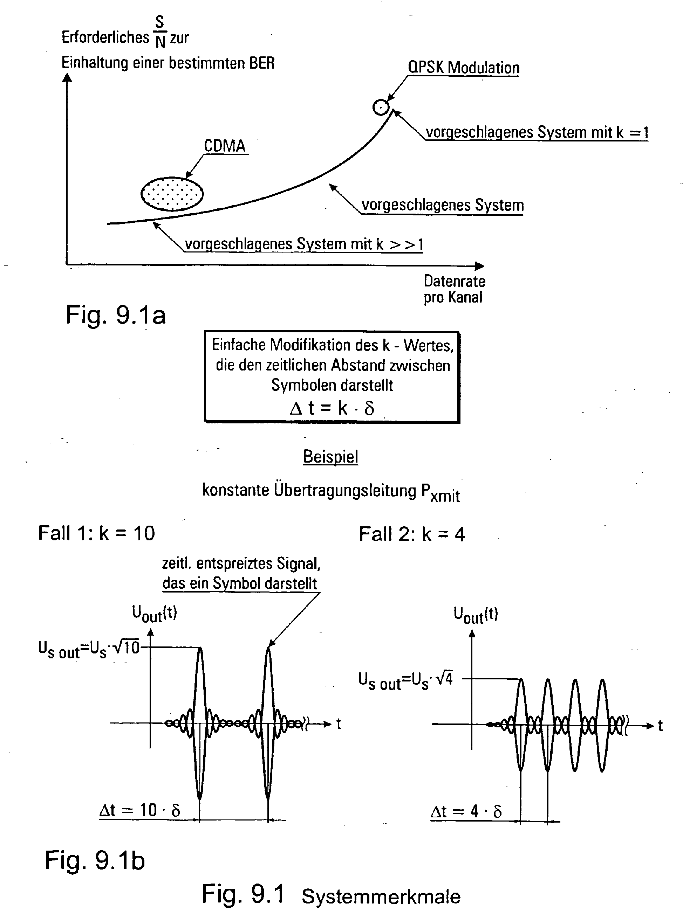

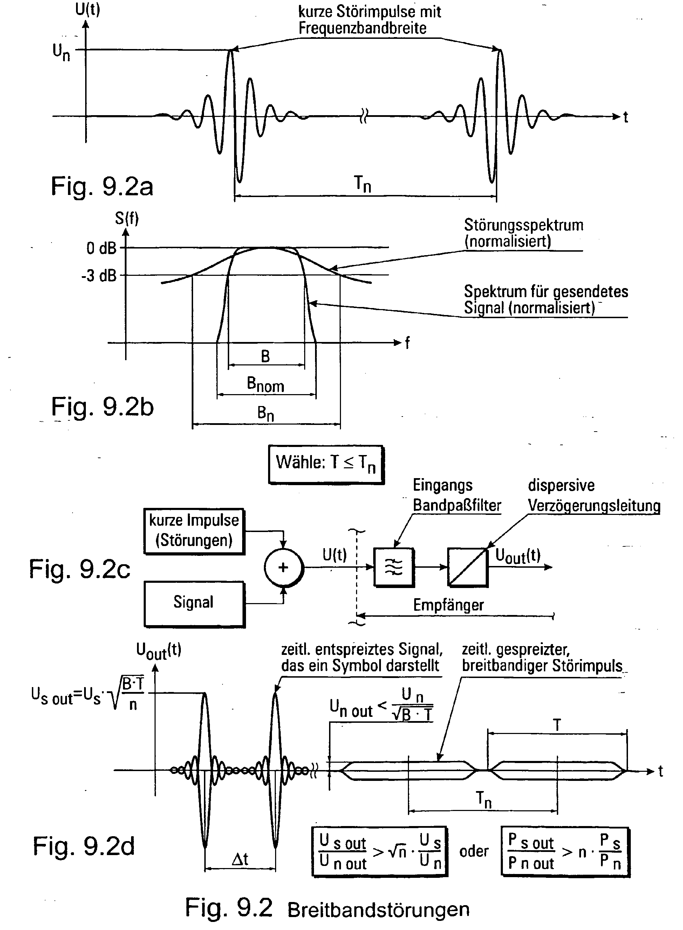

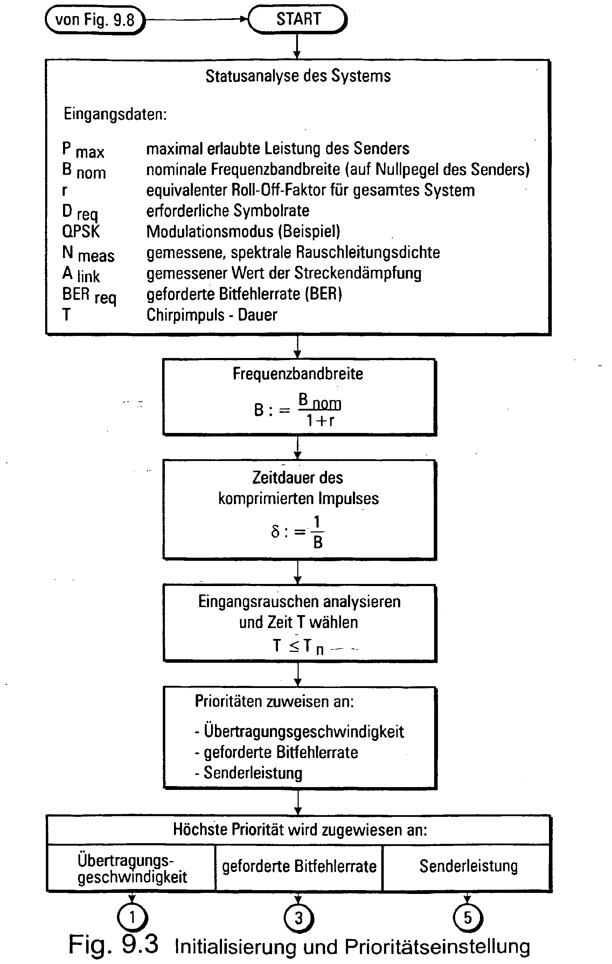

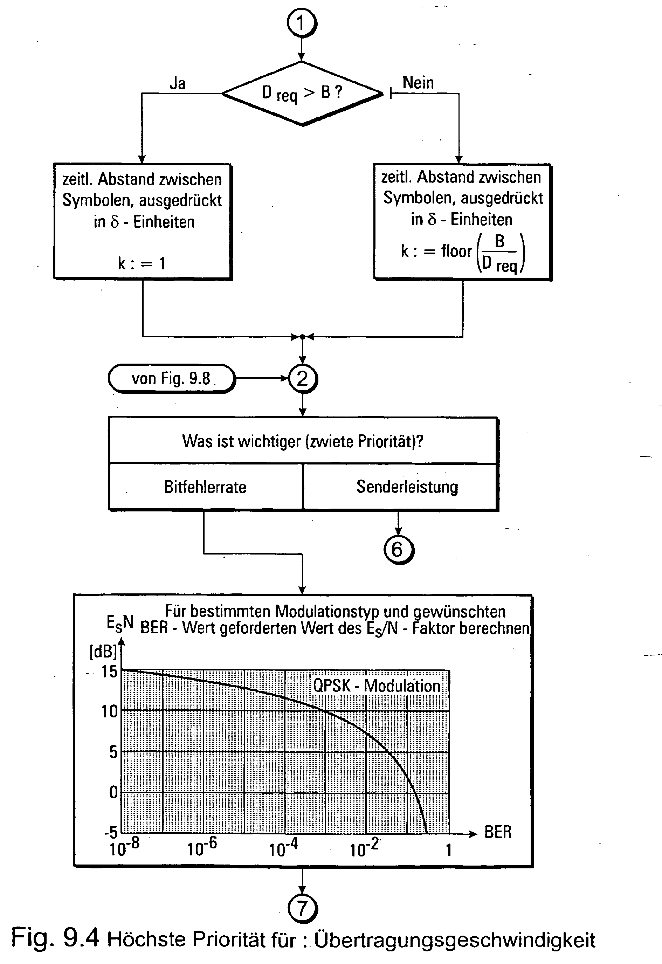

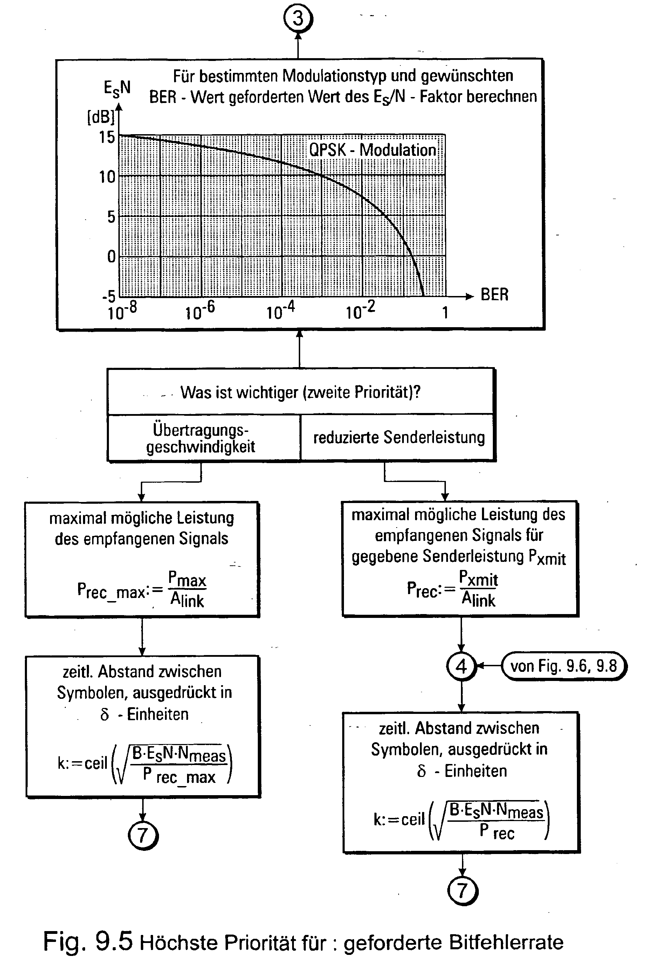

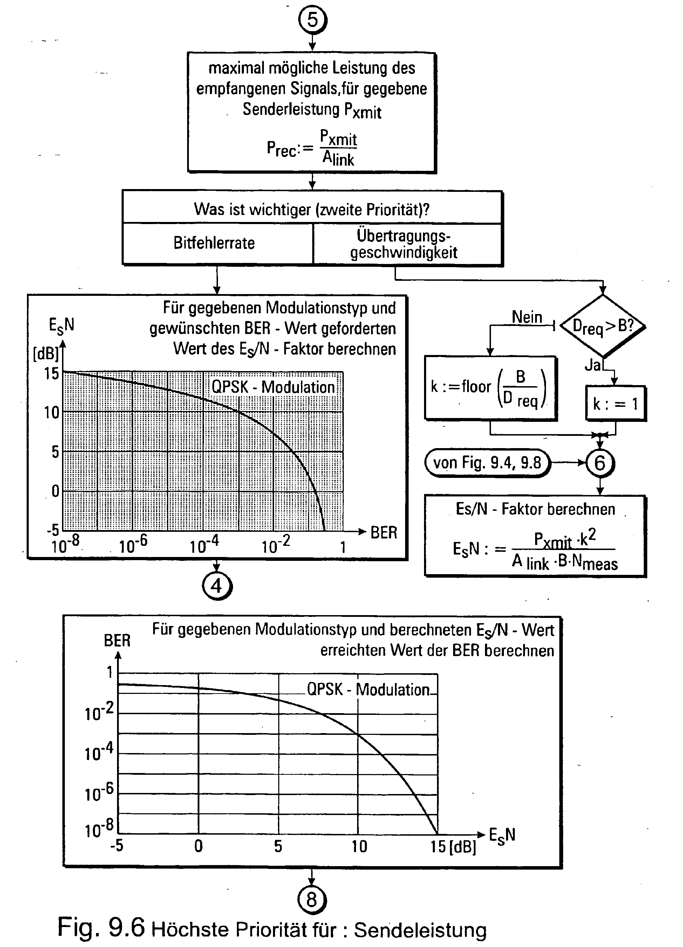

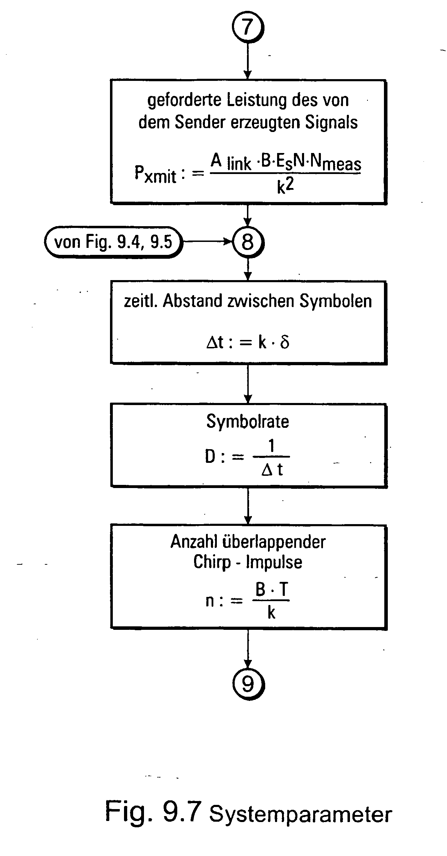

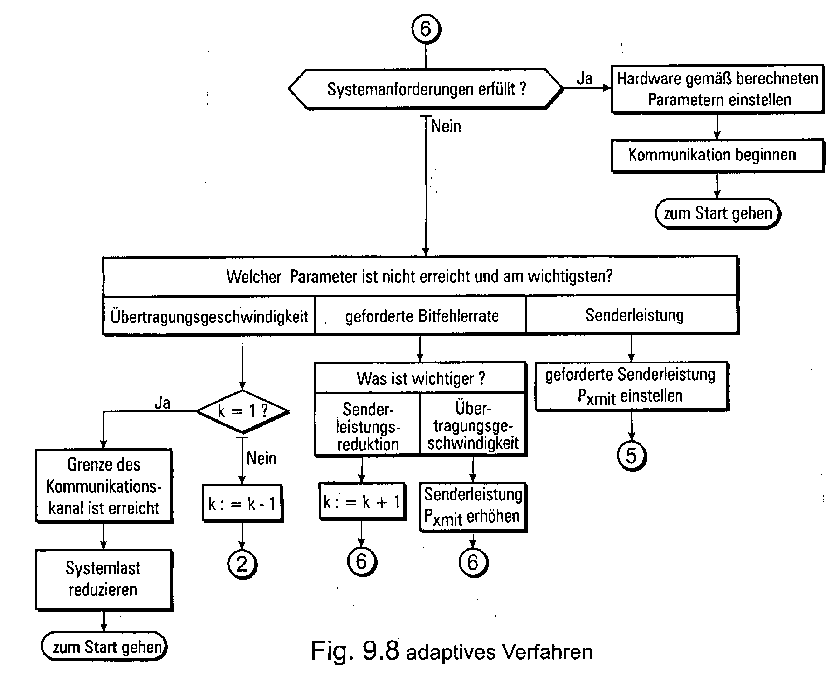

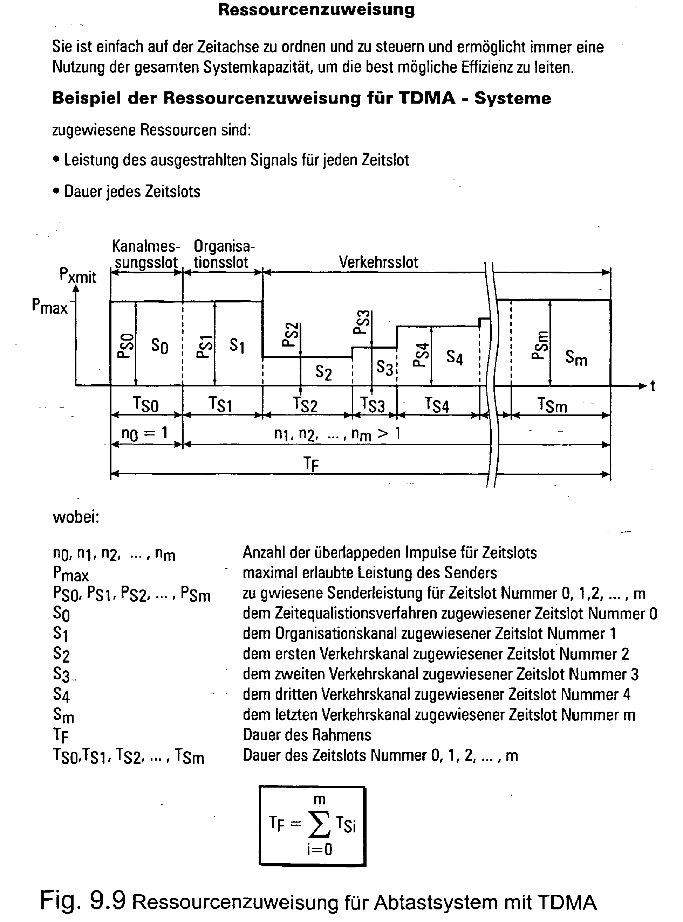

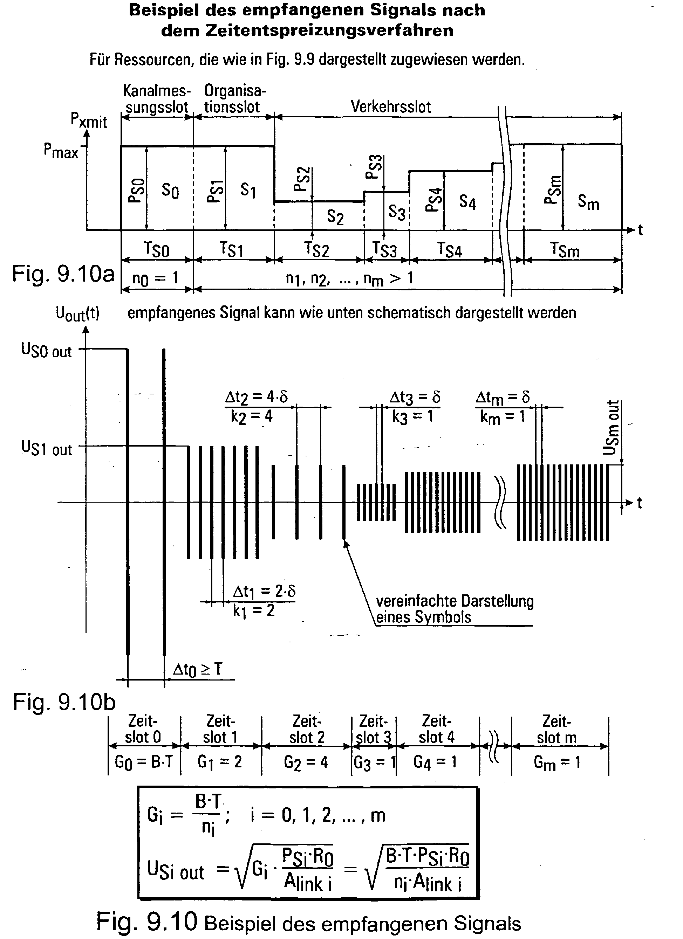

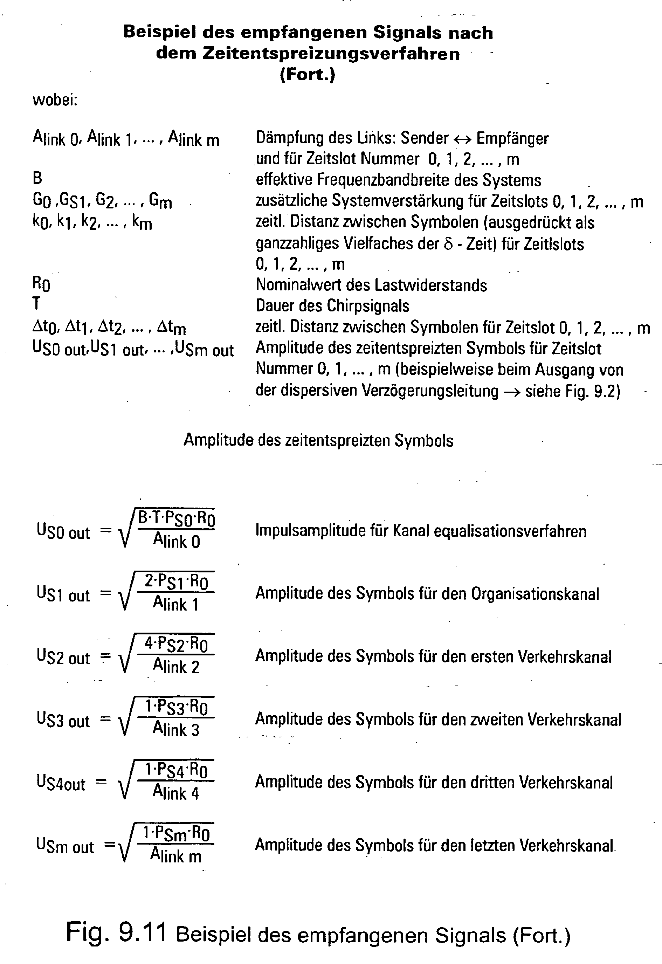

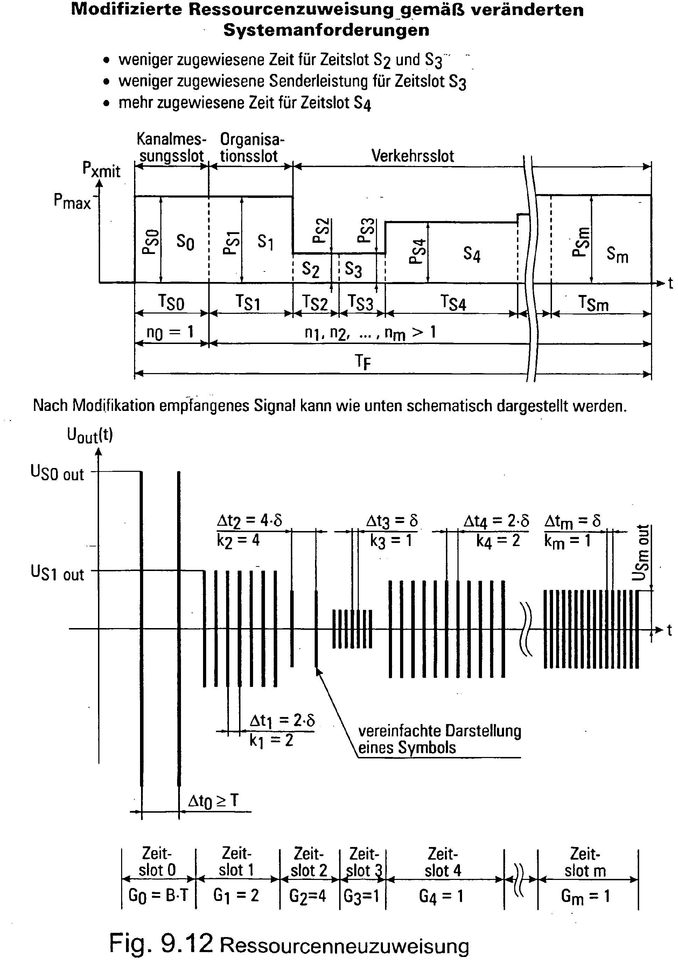

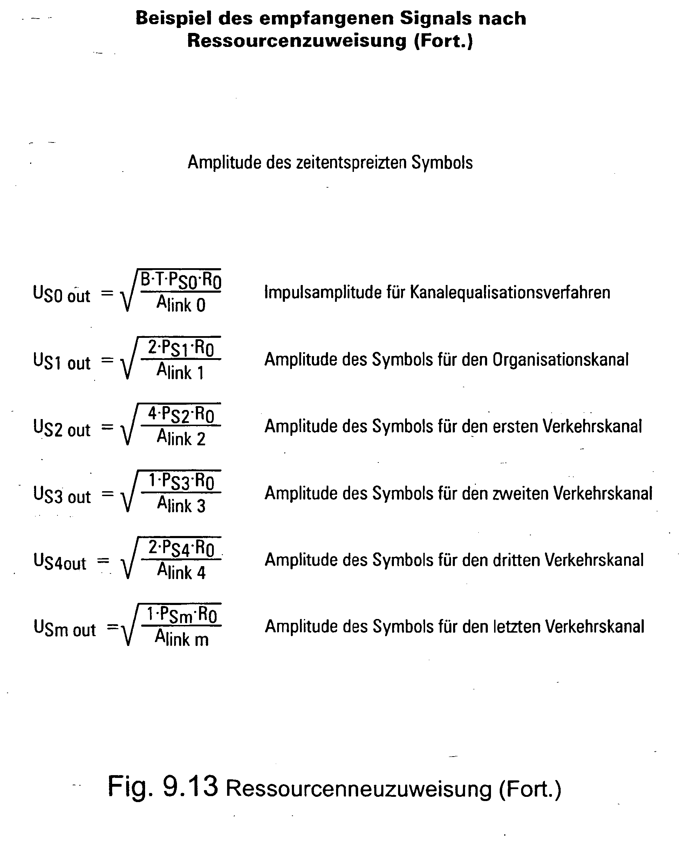

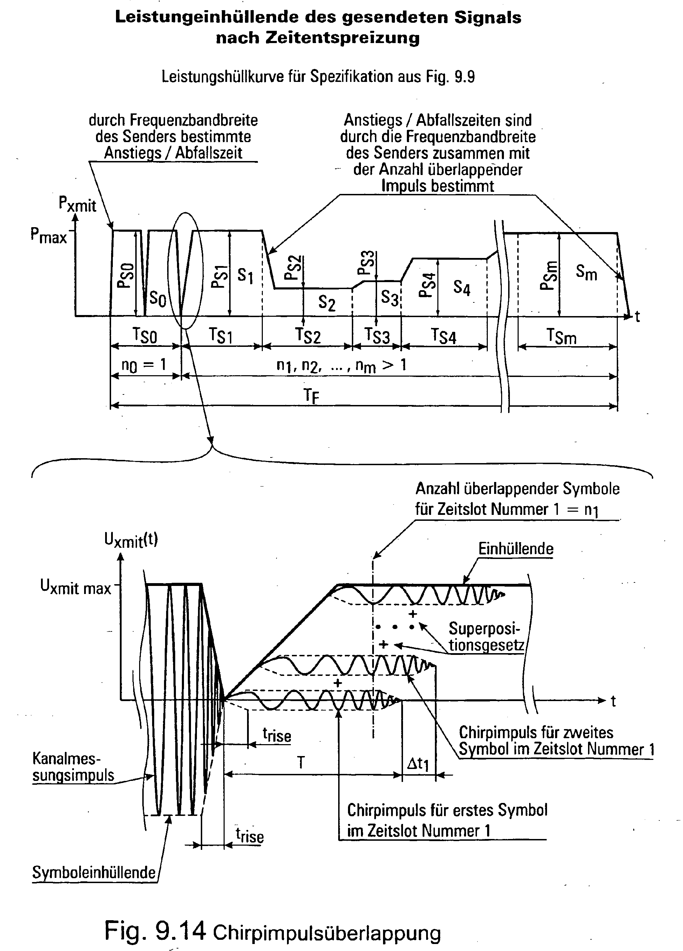

Figur 9.1a zeigt ein Diagramm, in dem das zur Einhaltung einer bestimmten BER notwendige S/N über der Datenrate aufgetragen ist. Im Bild dargestellt ist der Betriebsbereich gängiger CDMA-Systeme, die mit einem Spread Spectrum Verfahren mit fest eingestellter Frequenzspreizung arbeiten und im Vergleich dazu die Arbeitsbereiche eines QPSK-Systems und eines erfindungsgemäßen Übertragungssystems mit variabler Frequenzspreizung. Der Faktor k bezeichnet den Abstand benachbarter Symbole in Einheiten von $\delta$, wobei $\delta$ die mittlere Breite eines auf die Bandbreite B frequenzgespreizten Symbols darstellt ($\delta = 1/B$). Dieser Wert k kann als das Maß der Frequenzspreizung angesehen werden und ist identisch mit dem erreichbaren Systemgewinn G. Während das CDMA-Verfahren bei einem geringen erforderlichen S/N auf die Übertragung mit einer festen Datenrate angewiesen ist, erlaubt die variable Frequenzspreizung das Durchfahren des gesamten Bereichs [S/N; Datenrate] entlang der dargestellten Linie. Verringert sich die erforderliche BER, beispielsweise dann, wenn weniger sensible Daten übertragen werden sollen, dann kann die Übertragungsgeschwindigkeit erhöht werden. Für alle Punkte auf der Linie wird in jedem Fall die vollständige Ausnutzung der Ressource "Bandbreite" gewährleistet (Spektrale Effizienz). Frequenzreserven beliebiger Größe werden automatisch in einen Systemgewinn umgesetzt, der bei der Datenübertragung wirksam wird.

Figur 9.1 b enthält ein Beispiel zur frequenz- (und zeit-)gespreizten Übertragung. Die frequenzgespreizten Sendesymbole wurden mit gleicher Sendeleistung, aber mit verschiedenen Symbolraten (unterschiedliche Faktoren k) übertragen. Dargestellt sind die am Ausgang des empfangsseitigen Kompressionsfilters erscheinenden Signale. Die Spitzenamplituden $U_{S\,out}$ des komprimierten Signals sind gegenüber der Amplitude $U_S$ des empfangenen Spreizsignals um den Faktor $\sqrt{k}$ überhöht. Die Leistungsüberhöhung hat entsprechend den Wert k. Über die Symbolrate ist der Systemgewinn G = k variierbar.

Die frequenzgespreizten Symbole werden vor der Übertragung zum Empfänger zeitgespreizt. Die symbolweise erzeugten sin(x)/x-Impulse der Breite $\delta$ werden vor der Übertragung in Chirp-Impulse der Länge T umgewandelt. Damit bestimmt die Chirp-Dauer die maximal erreichbare Zeitspreizung [= T / $\delta$]. Ein besonderer Vorteil der zeitgespreizten Übertragung besteht in der Unterdrückung breitbandiger Störungen. Deshalb wird die Chirp-Dauer T abgestimmt auf die im Kanal periodisch auftretenden breitbandigen Störungen. Diese Abstimmung wird in Figur 9.2 demonstriert:

In Figur 9.2a dargestellt sind mögliche breitbandige Übertragungsstörungen, die mit der Periode $T_n$ auftreten.

Die Bandbreite $B_n$ der Störimpulse sei größer als die effektive Kanalbandbreite B.

Figur 9.2b zeigt die Spektren des Sendesignals und der überlagerten breitbandigen Störungen. $B_n$ ist die wirksame Bandbreite des Störsignals, begrenzt durch das Eingangsfilter im Empfänger. $B_{nom}$ ist die gesamte verfügbare (lizenzierte) Kanabandbreite, und B ist durch die Roll-Off-Filterung in Sender und Empfänger begrenzte Kanalbandbreite, die zur besseren Unterscheidung im folgenden als effektive Bandbreite bezeichnet wird.

Figur 9.2c zeigt, wie sich dem Sendesignal die Störimpulse additiv überlagern. Das Signalgemisch aus Daten- und Störimpulsen passiert im Empfänger zunächst ein Eingangsfilter und anschließend eine dispersive Delay Line (Chirp-Filter).

Figur 9.2d zeigt das Ausgangssignal $U_{out}(t)$ der Delay Line. Zum besseren Verständnis sind. die komprimierten Datenimpulse und die gedehnten Störanteile getrennt dargestellt. Mit $U_S$ wird die Amplitude der Datenimpulse vor der Kompression bezeichnet. $U_n$ ist die Amplitude der überlagerten breitbandigen Störimpulse. Am Ausgang des Kompressionsfilters hat sich die Amplitude der Datenimpulse auf das $\sqrt{(BT)}/n$-fache erhöht, während die Amplitude der Störimpulse auf das $1/\sqrt{(BT)}$-fache gesunken ist. Gegenüber dem unkomprimierten Empfangssignal hat sich der Signal-Störabstand um den Faktor $\sqrt{n}$ bei Betrachtung der Amplituden, bzw. um den Faktor n bei Betrachtung der Leistung erhöht. Rechts im Bild sind die beiden gedehnten Störimpulse dargestellt. Durch die erfahrene Spreizung sind sie auf die Dauer T verlängert worden. Prinzipiell kann man breitbandige Störungen durch die Wahl einer entsprechend hohen Chirp-Dauer T auf eine beliebige Länge spreizen. Eine Randbedingung bleibt aber die technische Realisierbarkeit der Chirpfilter. Wenn die beschriebenen Kurzzeitstörer periodisch auftreten, dann ist bei der Dimensionierung des Systems darauf zu achten, daß sich die gespreizten Störimpulse nicht überlappen, um eine unerwünschte Überhöhung im gedehnten Störsignal $U_{n\ out}$ zu vermeiden. Um diesen Fall auszuschließen, muß die einzustellende Chirp-Dauer T kleiner gewählt werden als die Periode $T_n$ der Störimpulse.

Durch die Zeitspreizung erlangt das zu übertragende Signal eine Resistenz gegenüber breitbandigen Störungen. In Abhängigkeit vom Auftreten periodischer breitbandiger Störimpulse wird das Maß der Zeitspreizung beim Herstellen einer Verbindung zwischen Basisstation und Teilnehmerstation vereinbart (eingestellt). Deshalb wird von einer variablen Zeitspreizung gesprochen.

Den einzelnen Teilnehmern bzw. den verschiedenen Zeitslots kann eine unterschiedliche Sendeleistung zugewiesen werden.

Die Einstellung dieser Parameter dient unmittelbar der flexiblen und adaptiven Reaktion auf variable Teilnehmeranforderungen, die Übertragungsdatenrate und die BER betreffend. Berücksichtigt wird im Ressourcen-Management, daß die unterschiedlichen Teilnehmer verschiedene Entfernungen zur Basisstation haben und daß für die einzelnen Übertragungspfade unterschiedliche Umgebungs-bedingungen (Störungen, Multipath-Effekte, Rauschen) gelten. Der Einsatz von Frequenzspreizung und Zeitspreizung bei der Nachrichtenübertragung bietet die Möglichkeit zur Unterdrückung von Rausch- und anderen Störsignalen.

Die Größen TDMA-Rasterung, Frequenzspreizung, Zeitspreizung und Sendeleistung können dynamisch an das Verkehrsaufkommen, an sich ändernde Übertragungsbedingungen und Teilnehmeranforderungen angepaßt werden. Sie sind zu einem gewissen Grade unabhängig voneinander einstellbar. Verändert werden aber in der Regel nicht einzelne dieser Größen, sondern ihr Zusammenspiel und Ineinandergreifen, wie das folgende Ausführungsbeispiel zeigt:

Im Ausführungsbeispiel wird das Prinzip dargestellt, nach dem Frequenzspreizung, Zeitspreizung und Sendeleistung aufeinander abgestimmt werden. Es wird gezeigt, in welcher Weise sich diese Parameter an Teilnehmeranforderungen, Übertragungsbedingungen und an die Verkehrsdichte anpassen (adaptieren) lassen.

Im dazu verwendeten Programmschema werden zunächst die Kanaleigenschaften analysiert, dann die Forderungen der Teilnehmer (Subscriber) an die Übertragung abgefragt und anschließend unter Berücksichtigung dieser Daten das Maß der Zeitspreizung, der Frequenzspreizung und die notwendige Sendeleistung bestimmt. Mit diesen Daten wird dann die Verbindung zum Teilnehmer hergestellt.

Eine herzustellende Verbindung ist im wesentlichen durch drei Eigenschaften charakterisiert:

- die gewünschte Übertragungsgeschwindigkeit (Übertragungsdatenrate)
- die geforderte Bitfehlerrate
- die gewünschte (ggf. auch die maximal erlaubte) Sendeleistung.

Diese drei Werte werden von einer Teilnehmerstation dann mitgeteilt, wenn sie eine Datenverbindung zur Basisstation herstellen will. Abhängig vom Charakter der übertragenen Daten können die drei Forderungen mit unterschiedlichen Prioritäten versehen werden. So kann die Bitfehlerrate, die zur Übertragung von Sprache verlangt wird, geringer sein, als die zur Übertragung sensibler Bankdaten notwendige BER. Zur Sprachübertragung würden die Prioritäten beispielsweise in der Reihenfolge [Sendeleistung, Übertragungsgeschwindigkeit, BER] gesetzt, zur Übertragung von Bankdaten beispielsweise in der Reihenfolge [BER, Sendeleistung, Übertragungsgeschwindigkeit].

Die Übertragung extrem langer Dateien (beispielsweise Grafikdateien) erfordert eine höhere Übertragungsgeschwindigkeit als etwa die Übermittlung von kurzen Datenbankabfragen. In anderen Bereichen, etwa bei medizintechnischen Anwendungen, kann die erlaubte Sendeleistung auf ein sehr geringes Maß begrenzt sein, während an die Übertragungsgeschwindigkeit keine erhöhten Anforderungen gestellt werden.

In den Abbildungen Figur 9.3 bis Figur 9.8 wird ein Programmablauf demonstriert, der die Teilnehmeranforderungen (einschließlich der gesetzten Prioritäten) aufnimmt und, abgestimmt auf die Kanaleigenschaften, unter Verwendung von Frequenz- bzw. Zeitspreizung und Leistungssteuerung eine Verbindung mit der höchstmöglichen Störsicherheit herstellt.

Zum Startzeitpunkt liegt der Verbindungswunsch eines Teilnehmers vor. Die Basisstation hat für diese Verbindung bereits einen Zeitschlitz bestimmter Länge im TDMA-Rahmen reserviert. (Dieser Zeitschlitz kann im weiteren Verlauf der Verbindung vergrößert oder verkleinert werden, was eine Abstimmung mit den übrigen Teilnehmern voraussetzt und einigen protokollarischen Aufwand erfordert. Eine Verlängerung des zugewiesenen Zeitschlitzes ist z.B. dann erforderlich, wenn der Teilnehmer innerhalb einer laufenden Verbindung die Erhöhung der Datenrate fordert, ohne daß eine Verminderung der BER oder eine Erhöhung der Sendeleistung möglich ist.) Für das folgende Programmschema wird ein Zeitschlitz konstanter Länge vorausgesetzt.

Der Programmablaufplan ist in fünf Teile gegliedert, die jeweils in einer eigenen Abbildung dargestellt sind. Der erste Teil (siehe Figur 9.3) beschreibt die Eingangs-daten zum Anmeldezeitpunkt und die möglichen Prioritäten, die ein Teilnehmer setzen kann. Abhängig von der dazu getroffenen Auswahl (Übertragungsgeschwindigkeit, geforderte BER, Sendeleistung) wird anschließend auf die Programmteile in Figur 9.4, Figur 9.5 oder Figur 9.6 verzweigt. In diesen Programmteilen wird aus der bevorzugten Größe (Priorität 1) und der jeweils mit "Priorität 2" versehenen Größe die dritte Größe (Priorität 3) bestimmt. Beispielsweise wird für die Übertragung mit einer gewünschten Symbolrate und einer geforderten BER die bei Beachtung der Randbedingungen (Streckendämpfung, Rauschleistungsdichte) notwendige Sendeleistung berechnet.

In Figur 9.7 ist eine Rechen-Prozedur dargestellt, die von den drei vorangegangenen Programmteilen aufgerufen wird. Mit dieser Prozedur werden die jeweils für den Teilnehmer erreichbare Symbolrate und die mögliche Zeitspreizung berechnet.

Die gewonnenen Ergebnisse werden der "Adaptiven Prozedur" in Figur 9.8 übergeben. Diese Prozedur überprüft, ob die berechneten, d.h. für die Übertragung vorgesehen Werte: Symbolrate, BER und Sendeleistung den Teilnehmeranforderungen genügen bzw. vom Übertragungssystem realisierbar sind. Wenn ja, dann wird eine Verbindung zum Teilnehmer mit genau diesen Werten aufgebaut. Andernfalls werden, wiederum über eingestellte Prioritäten gesteuert, Programmschleifen durchlaufen, mit denen Symbolrate und Sendeleistung so lange verändert werden, bis eine Datenübertragung mit diesen Parametern durchführbar ist. Die Adaptive Prozedur ist ebenfalls in der Lage, auf Änderungen der Streckendämpfung und der spektralen Rauschleistungsdichte zu reagieren, so daß auch eine dynamische Anpassung des Übertragungssystems an veränderte Übertragungsbedingungen erreicht werden kann.

In Figur 9.3 sind die Eingangsdaten dargestellt, die dem Übertragungssystem bekannt sein müssen. Dabei handelt es sich entweder um feste Größen (Eckdaten), die systemspezifisch und unveränderlich sind (z.B. maximale Sendeleistung $P_{max}$, Kanalbandbreite $B_{nom}$, Modulationsart, Roll-Off-Faktor r), um Teilnehmer-Anforde-ungen (wie die geforderte Bitfehlerrate BEF\eq oder die geforderte Symbolrate $D_{req}$) oder um Kanaleigenschaften, die in speziellen Meßzyklen ermittelt werden müssen (Streckendämpfung $A_{link}$, spektrale Rauschleistungsdichte $N_{meas}$.

Für diese Eingangsdaten, die zum Einstiegszeitpunkt gültig sind, wird die Verbindung des Teilnehmers zur Basisstation organisiert. Ist der Datensatz "Input-Data" vollständig, können die Übertragungeigenschaften festgelegt werden.

Dazu wird zunächst die effektive Bandbreite B des Übertragungssystems (die durch - Filterung mit dem Roll-Off-Faktor r reduzierte Kanalbandbreite) bestimmt.

Anschließend wird aus der effektiven Bandbreite B die mittlere Breite $\delta$ eines komprimierten Impulses berechnet. Die Berechnung von $\delta$ hat den Hintergrund, daß in dem später durchzuführenden Vorgang der Frequenzspreizung jedes zu übertragende Symbol in einen sin(x)/x-förmigen Impuls umgewandelt wird. Ein derartiger Impuls hat die volle Bandbreite B und eine mittlere zeitliche Breite von $\delta$ = 1/B. Vor der Übertragung wird der sin(x)/x-Impuls in einen Chirpimpuls gleicher Bandbreite umgewandelt. Im Empfänger wird der Chirpimpuls komprimiert. Der komprimierte Impuls hat wieder einen sin(x)/x-förmigen Verlauf und die mittlere Breite$\delta$.

Im folgenden Feld wird die Chirp-Dauer T festgelegt. Die Chirp-Dauer T wird auf die im Kanal (eventuell periodisch) auftretenden breitbandigen Störungen abgestimmt. Haben diese Störungen die Periode $T_n$, dann muß die einzustellende Chirp-Dauer T kleiner gewählt werden als $T_n$.

In dem sich anschließenden Feld wird festgehalten, auf welche der drei Übertragungsgrößen (Übertragungsgeschwindigkeit, BER und Sendeleistung) die höchste Priorität (Priorität 1) und die zweithöchste Priorität (Priorität 2) gesetzt wird. Der weitere Programmablauf wird dadurch bestimmt. Für die drei möglichen Entscheidungen (Priorität 1 betreffend) werden im folgenden mit Verweis auf die Abbildungsnummern die entsprechenden Programmschritte dargestellt:

**[I]. Höchste Priorität auf Übertragungsgeschwindigkeit (Figur 9.4)**

Im ersten Schritt (s.Figur 9.4) wird aus der geforderten Symbolrate $D_{req}$ und der effektiven Bandbreite B der notwendige Abstand k benachbarter Symbole berechnet. Vorausgesetzt wird hier, daß dieser Abstand ein ganzzahliges Vielfaches der mittleren Impulsbreite $\delta$ ist. Die Distanz k wird in Einheiten von $\delta$ angegeben.
Im zweiten Schritt wird die Priorität 2 abgefragt.

[1]; Priorität 2 auf BER

- Zwingend ist also die Einhaltung einer geforderten BER. Aus einer im Speicher abgelegten Tabelle wird für die betreffende Modulationsart (im Beispiel QPSK) das für die geforderte Bitfehlrate $BER_{req}$ im Empfänger notwendige Verhältnis $E_S/N$ abgelesen. ($E_S$ bezeichnet die Bit-Energie und N die spektrale Rauschleistungsdichte). Für eine BER von $10^{-3}$ ist laut dargestellter Grafik beispielsweise ein $E_S/N$ von 10 dB erforderlich.
  Die Prozedur verzweigt zum Eintrittspunkt 7 (siehe Figur 9.7)

- Aus dem berechneten Verhältnis $E_S/N$, der gemessenen Streckendämpfung $A_{link}$, der Rauschleistungsdichte $N_{meas}$, der effektiven Bandbreite B und der Impulsdistanz k wird die benötigte Sendeleistung $P_{xmit}$ bestimmt.
  Die Prozedur verzweigt zum Eintrittspunkt 8 (siehe Figur 9.7)

- Aus dem Distanzfaktor k und der mittleren Impulsbreite $\delta$ wird der Abstand $\Delta t$ benachbarter Symbole (= Symboldauer) in Zeiteinheiten [sec] berechnet. Mit diesem Symbolabstand $\Delta t$ wird die spätere Übertragung durchgeführt.

- Im folgenden Schritt wird die vorgesehene Symbolrate D der Übertragung bestimmt.

- Im nächsten Schritt wird die Anzahl n der nach einer durchgeführen Zeitspreizung überlappenden Chirpimpulse bestimmt. Beim Vorgang der Zeitspreizung werden die einzelnen sin(x)/x-Impulse um den Faktor $\psi$ = BT zeitgespreizt. Ein Einzelimpuls der mittleren Breite $\delta$ wird in einen Chirpimpuls der Breite T umgewandelt. Ist die Chirp-Dauer T größer als die Symboldauer $\Delta t$, dann können wir von einer zeitgespreizten Übertragung der Symbole sprechen. In diesem Fall überlappen sich benachbarte (gechirpte) Symbole mehr oder weniger stark. Der Quotient n = BT/k (=$T/\Delta t$) gibt die Anzahl der Symbole an, die sich zu einem beliebigen Zeitpunkt überlappen. Dieser Wert n kann als das eigentliche Maß der Zeitspreizung angesehen werden.
  Die Prozedur verzweigt zum Eintrittspunkt 9 der Adaptiven Prozedur (siehe Figur 9.8).

[I]; Priorität 2 auf Transmitter Power (Figur 9.4)

- Gesendet werden soll mit der festgelegten Leistung $P_{xmit}$
  Die Prozedur verzweigt zum Eintrittspunkt 6. (siehe Figur 9.6)

- Aus der Sendeleistung, der Streckendämpfung $A_{link}$, der Rauschleistungsdichte $N_{meas}$, der effektiven Bandbreite und dem Distanzfaktor k wird das erreichbare $E_S/N$ berechnet.

- Aus einer im Speicher abgelegten Tabelle wird für den vorliegenden Modulationstyp (im Beispiel QPSK) die für das ermittelte $E_S/N$ erreichbare Bitfehlrate bestimmt.

- Die Prozedur verzweigt zum Eintrittspunkt 8 (siehe Figur 9.7)

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8)

Für den Fall, daß die höchste Priorität der Übertragung auf das Erreichen einer bestimmten Übertragungsgeschwindigkeit gelegt wird und für die Festlegung einer 2. Priorität entweder auf das Erreichen einer bestimmten BER oder auf die Einhaltung einer vorgegebenen Sendeleistung sind die Programmabläufe detailliert geschildert worden. Beide prioritätsbestimmten Teilprozeduren verzweigen nach Bestimmung aller Parameter der Übertragung letztlich zur Adaptiven Prozedur, dargestellt in Figur 9.8. Die Wirkungsweise dieser Prozedur wird in einem späteren Abschnitt demonstriert.

**[II] Höchste Priorität auf Einhaltung einer geforderten BER (Figur 9.5)**

Die Prozedur startet am Eintrittspunkt 3 (siehe Figur 9.5). Für die verlangte Bitfehlerrate wird das notwendige $E_S/N$ bestimmt.

Anschließend wird die zweite Priorität abgefragt.

[II]; Priorität 2 auf Übertragungsgeschwindigkeit

- Bestimmung der maximal möglichen Empfangsleistung unter der Voraussetzung, daß der Sender die maximale Sendeleistung $P_{max}$ abgibt.

- Bestimmung des für diese Empfangsleistung notwendigen Faktors k (Welcher Systemgewinn G = k gewährleistet im Empfänger ein ausreichend hohes Signal-zu Rauschverhältnis ?)
  Die Prozedur verzweigt zum Eintrittspunkt 7 (siehe Figur 9.7).

- Mit dem ermittelten Distanzfaktor k wird die erforderliche Sendeleistung $P_{xmit}$ berechnet. (Die bisher abgelaufene Prozedur läßt erwarten, daß $P_{xmit}$ bis auf einen Rundungsfehler in etwa der maximalen Sendeleistung $P_{max}$ gleicht).

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8)

[II]; Priorität 2 auf eine vorgegebene reduzierte Sendeleistung (Figur 9.5)

- Für die vorgegebene Sendeleistung wird die erreichbare Empfangsleistung ermittelt.

- Bestimmung des für diese Empfangsleistung notwendigen Faktors k (welcher Systemgewinn G = k gewährleistet das im Empfänger geforderte $E_S/N$ ?).
  Die Prozedur verzweigt zum Eintrittspunkt 7 (siehe Figur 9.7).

- Mit dem ermittelten Distanzfaktor k wird die erforderliche Sendelettung $P_{xmit}$ berechnet. (Die bisher abgelaufene Prozedur läßt erwarten, daß die erforderliche Sendeleistung $P_{xmit}$ bis auf einen Rundungsfehler der vorgegebenen Sendeleistung gleicht.)

- Berechnet werden Symbolabstand $\Delta t$, Symbolrate D und die Anzahl n der überlappenden Impulse.
  Die Prozedur verzweigt zum Eintrittspunkt 9 der Adaptiven Prozedur (siehe Figur 9.8).

**[III] Höchste Priorität auf Einhaltung einer vorgegebenen Sendeleistung (Figur 9.6)**

Die Prozedur startet am Eintrittspunkt 5 (siehe Figur 9.6).

Für die vorgegebene Sendeleistung wird die erreichbare Empfangsleistung ermittelt.

Anschließend wird die zweite Priorität festgelegt.

[III]; Priorität 2 auf die Einhaltung einer vorgegebenen BER

- Bestimmung des zur Einhaltung dieser BER im Empfänger notwendigen $E_S/N$.
  Die Prozedur verzweigt zum Eintrittspunkt 4 (siehe Figur 9.5).
  Bestimmung des für dieses $E_S/N$ notwendigen Faktors k .(welcher Systemgewinn G = k gewährleistet im Empfänger ein ausreichend hohes Signal-zu Rauschverhältnis?).
Die Prozedur verzweigt zum Eintrittspunkt 7 (siehe Figur 9.7).

- Mit dem ermittelten Distanzfaktor k wird die erforderliche Sendeleistung $P_{xmit}$ berechnet. (Die bisher abgelaufene Prozedur läßt erwarten, daß $P_{xmit}$ bis auf eine auftretende Rundungsdifferenz der vorgegebenen Sendeleistung gleicht).

- Berechnet werden Symbolabstand $\Delta t$, Symbolrate D und die Anzahl n der überlappenden Impulse.
Die Prozedur verzweigt zum Eintrittspunkt 9 der Adaptiven Prozedur (siehe Figur 9.8).

[III]; Priorität 2 auf die Einhaltung einer vorgegebenen Übertragungsgeschwindigkeit (siehe Figur 9.6)

- Bestimmung des bei Einhaltung der gewünschten Symbolrate $D_{req}$ erreichbaren Faktors k (welcher Systemgewinn G = k ist noch erreichbar, wenn bei einer Bandbreite B mit einer Datenrate $D_{req}$ übertragen werden soll?).

- Bestimmung des mit dem errechneten Distanzfaktor k noch erreichbaren $E_S/N$.

- Aus einer im Speicher abgelegten Tabelle wird für den vorliegenden Modulationstyp (im Beispiel QPSK) die für das ermittelte $E_S/N$ erreichbare Bitfehlerrate bestimmt.
Die Prozedur verzweigt zum Eintrittspunkt 8 (siehe Figur 9.7).

- Berechnet werden Symbolabstand $\Delta t$, Symbolrate D und die Anzahl n der überlappenden Impulse.
Die Prozedur verzweigt zum Eintrittspunkt 9 der Adaptiven Prozedur (siehe Figur 9.8).

Am Beispiel des zuletzt dargestellten Falls III (Priorität 1 auf die Einhaltung einer vorgegebenen Sendeleistung, Priorität 2 auf die Einhaltung einer vorgegebenen Übertragungsgeschwindigkeit) soll anschließend die Wirkungsweise der Adaptiven Prozedur (vgl. Abb. 9.8) verdeutlicht werden.

Die Adaptive Prozedur startet am Eintrittspunkt 9 (siehe Figur 9.8)

- Zunächst findet eine Prüfung statt, ob eine Datenübertragung mit den ermittelten und übergebenen Parametern (Symbolrate, BER, Sendeleistung) stattfinden kann. Wenn das Übertragungssystem den so bestimmten Betriebsfall zuläßt, dann werden die Sende/Empfangseinrichtungen entsprechend eingerichtet, und die Übertragung beginnt. Anschließend verzweigt die Prozedur wieder zum Start (siehe Figur 9.3).

Falls das Prüfungsergebnis negativ ausfällt, wird in der Reihenfolge der festgelegten Prioritäten überprüft, welche der geforderten Parameter nicht eingehalten werden.

- Ist die Sendeleistung nicht ausreichend, dann wird der Parameter $P_{xmit}$ neu gesetzt, und die Prozedur verzweigt zum Eintrittspunkt 5. Mit der neugewählten Sendeleistung werden auch die übrigen Parameter neu bestimmt. Haben sich zwischenzeitlich die Übertragungsbedingungen (Streckendämpfung, Rauschleistungsdichte) geändert, dann werden die Änderungen mit in die Neubestimmung aufgenommen. Wird die Adaptive Prozedur wieder erreicht, dann beginnt die Prüfung erneut. Diese Schleife wird so lange durchlaufen, bis die notwendige Sendeleistung eingestellt ist.

- Wird (entsprechend Priorität 2) die geforderte Übertragungsgeschwindigkeit nicht erreicht, dann wird zunächst geprüft, ob Reserven für eine Erhöhung der Symbolrate bestehen. Falls der Distanzfaktor k bereits den Wert 1 hat, existieren keinerlei Reserven. In diesem Fall ist die Symbolrate gleich der effektiven Bandbreite. Ein Einzelsymbol hat die volle Bandbreite, das heißt, die Obergrenze der Symbolrate ist erreicht. Eine Frequenzspreizung findet nicht statt, der Systemgewinn beträgt G = k = 1. Eine Erhöhung der für den Teilnehmer wirksamen Übertragungsrate ist nur durch eine Verlängerung seines Zeitschlitzes im TDMA-Rahmen zu erreichen. Das setzt eine Verringerung der gesamten Systembelastung, ggf. ein Warten auf diese verringerte Systemauslastung voraus. Ist diese erreicht, dann kann die gewünschte Verbindung hergestellt werden. Die Prozedur verzweigt zum Start (Figur 9.3).
Falls der Wert k bei der Abfrage einen Wert k > 1 hat, dann besteht die Möglichkeit, die Symbolrate zu erhöhen und im Gegenzug die Frequenzspreizung bzw. den dazugehörigen Systemgewinn G = k zu verringern: Dazu wird k zunächst um 1 vermindert. Zu erwarten ist in diesem Fall eine Erhöhung der Bitfehlerrate. Ob diese erhöhte BER tragbar ist, wird wieder in einem Schleifendurchlauf (Sprung zu Eintrittspunkt 2) entschieden. Ist in der Schleife die Adaptive Prozedur erreicht, beginnt dieser Ablauf von neuem, bis die geforderte Übertragungsgeschwindigkeit erreicht ist.

- Wird (entsprechend Priorität 3) in der Systemabfrage die geforderte BER nicht erreicht, dann wird nach der Prioritätenliste entschieden, ob die Datenrate oder die Sendeleistung variiert werden kann. Im betrachteten Fall hat eine feste Sendeleistung Priorität, also verzweigt die Prozedur zur Änderung der Symbolrate, in diesem Fall zu einer Verringerung der Symbolrate. Dazu wird der Distanzfaktor k um 1 erhöht, der Symbolabstand vergrößert sich. Ob der neue Symbolabstand ausreichend hoch ist, um die gewünschte BER einzuhalten, wird in einem Schleifendurchlauf (Sprung zu Eintrittspunkt 6; siehe Figur 9.6) untersucht. Ist die dort angestoßene Prozedur durchgelaufen bis zur Adaptiven Prozedur (Figur 9.8), dann läuft die Schleife nötigenfalls erneut ab, bis die geforderte BER erreicht ist.

Nachfolgend wird die Verteilung der Ressourcen Sendeleistung und Zeitschlitzlänge auf die einzelnen Teilnehmerstationen in einem erfindungsgemäßen Übertragungssystem anhand der Abbildungen Figur 9.9 bis 9.14 beschrieben.

In Figur 9.9 ist ein TDMA-Rahmen der Rahmenlänge $T_F$ dargestellt. Der Rahmen ist aufgeteilt in ein Intervall $T_{S0}$ zur Kanalmessung, einen Organisationskanal der Länge TS1 und m voneinander unabhängige Nachrichtenkanäle mit den Slotbreiten $T_{S2}$, $T_{S3}$, ... $T_{Sm}$. Jedem dieser Zeitslots kann eine Sendeleistung $P_s$ zugewiesen werden ($P_{S0}$, $P_{S1}$, ..., $P_{Sm}$). Die Sendeleistung der einzelnen Kanäle ist auf einen Maximalwert $P_{max}$ begrenzt. Mit der Zahl n ($n_0$, $n_1$, ..., $n_m$) wird die Anzahl der sich zu einem beliebigen Zeitpunkt im betreffenden Slot 0, 1, ..., m übetappenden Impulse bezeichnet. Der Wert n ist von der im jeweiligen Slot erreichten Symboldauer und der Chirp-Dauer T abhängig ($N = T / \Delta t$). Nimmt man den oben eingeführten Distanzfaktor k (den Quotienten aus effektiver Bandbreite und verwirklichter Symbolrate D) und das BT-Produkt des zur Zeitspreizung verwendeten Chirpfilters als Grundlage der Berechnung, dann bestimmt sich der Wert n zu $n = BT/k$.

In Figur 9.9 ist zu erkennen, daß jedem Zeitschlitz separat eine Slotlänge und eine Sendeleistung zugewiesen werden können. Eine Konsequenz der variablen Zeitspreizung, die im Programmschema nach Figur 9.3 bis 9.8 demonstriert wurde, ist die zeitschlitzbezogen unterschiedliche Zahl n der überlappenden Impulse. In jedem - Zeitschlitz teilt sich also die Sendeleistung $P_S$ zu jedem Zeitpunkt auf n überlappende Chirpimpulse auf. Wählt man, wie im Zeitschlitz zur Kanalmessung, den Symbolabstand so groß, daß sich benachbarte Chirpimpulse nicht mehr überlappen (in diesem Fall gilt $\Delta t \geq T$), dann wird ein einzelner Chirpimpuls, d.h. ein einzelnes übertragenes zeitgespreiztes Symbol, mit der gesamten Sendeleistung des Slots, beispielsweise mit der maximalen Sendeleistung übertragen, wie im Bild für Slot 0 dargestellt.

Figur 9.10a zeigt die aus Figur 9.9 bekannte Verteilung der Kanalressourcen eines TDMA-Systems. In dem in Figur 9.10b abgebildeten Diagramm ist schematisch das im Empfänger durch Zeitkompression erhaltene Signal dargestellt.

Erkennbar ist, daß die Spitzenamplitude $U_{S0out}$ des zeitlich komprimierten (entspreizten) Signals für Slot 0 ($P_{S0}$ = $P_{max}$, $n_0$ = 1) am größten ist. Im daneben befindlichen Slot 1 ist mit der gleichen Sendeleistung ($P_{S1} = P_{max}$) übertragen worden. Die erreichte Spitzenamplitude $U_{S1out}$ der komprimierten Impulse ist wesentlich kleiner. Im Time-Slot 0 [$T_{S0}$] wird ein Symbolabstand von $\Delta t_0 \geq T$ erreicht, für den Time-Slot 1 [$T_{S1}$] ist eine höhere Symbolrate vorgesehen, der Symbolabstand $\Delta t_1$ ist entsprechend geringer. Unten im Bild ist dargestellt, wie für die einzelnen Zeit-Slots der erreichbare Systemgewinn berechnet wird. Die Symbole im Zeitschlitz zur Kanatmessung werden mit einer sehr geringen Symbolrate, dafür aber mit dem maximal möglichen Systemgewinn $G_0 = BT$ übertragen. Erhöht man die Symbolrate unter Bebehaltung der Chirp-Dauer T, dann verringert sich der Systemgewinn bis zu einem Wert G = 1, im Beispiel dargestellt für den Zeitschlitz m [$T_{Sm}$] . Darin hat die Symbolrate D ihr Maximum erreicht, benachbarte Symbole haben den Abstand δ. Die Symbolrate D ist in diesem Fall gleich der effektiven Bandbreite B; eine Frequenzspreizung findet nicht statt (Grenzfall bei höchstmöglicher Datenrate).

Für die Slots 0, 1 und m war eine maximale Sendeleistung angenommen worden ($P_{S0} = P_{S1} = P_{Sm} = P_{max}$). Am Beispiel der Slots 2, 3, 4, ... wird im Slot-Diagramm gezeigt, daß die Sendeleistung auch Werte unterhalb von $P_{max}$ annehmen kann. In der Organisation der Teilnehmerzugriffe existieren also drei Freiheitsgrade - die Zeitschlitzlänge, die Symbolrate innerhalb der einzelnen Zeitschlitze und die für die einzelnen Slots vorgesehene Sendeleistung.

Betrachtet man etwa Slot 3, dann wird deutlich, daß mit einer sehr geringen Sendeleistung $P_{S3}$ und mit der maximal möglichen Symbolrate 1δ gesendet wird. Diese Kombination wird in der Regel nur dann möglich sein, wenn bei gegebener Rauschleistungsdichte die vom Sendesignal zu überwindende Distanz gering ist. Den anderen Extremfall - maximale Sendeleistung bei sehr geringer Symbolrate - demonstriert das Intervall zur Kanalmessung (Slot 0). Für Meßzwecke geht es darum, die beiden Impulse besonders gegen Rauschstörungen gesichert, d.h. mit erhöhtem S/N zu übertragen. Zu diesem Zweck wird der maximale systemimmanente Spreizgewinn $G_{max} = BT$ für die Übertragung jedes einzelnen Meßsymbols aktiviert und zusätzlich die Sendeleistung $P_{xmit}$ maximiert ($P_{xmit} = P_{max}$).

Zwischen diesen Extremen sind die Slotdaten des TDMA-Rahmens an variable Teilnehmeranforderungen und Übertragungsbedingungen anzupassen. Dabei ist noch ein weiterer Aspekt zu beachten: In der Regel wird die Übertragung durch Multipath-Effekte gestört. Das bedeutet, daß Nachrichtensymbole eines Zeitschlitzes durch Mehrfachreflexionen verzerrt werden und im eigenen Zeitschlitz wie auch in nachfolgenden Zeitschlitzen Intersymbolinterferenzen hervorrufen können. Um die dadurch hervorgerufene Störleistung in nachfolgenden Zeitschlitzen (bezüglich der dort eingestellten Sendeleistung $P_S$) so gering wie möglich zu halten, ist es vorteilhaft, die einzelnen Verkehrs - Zeitschlitze innerhalb des TDMA-Rahmens nach aufsteigender Leistung zu sortieren. Beispiel: $P_{S2} < P_{S3} < P_{S4} < ... < P_{Sm}$ .

In Figur 9.10 zusätzlich dargestellt sind die Formeln zur Bestimmung des Systemgewinns G und der Spitzenamplitude $U_{si\_out}$ des empfängerseitig komprimierten Signals für die einzelnen Zeitschlitze.

In Figur 9.11 werden die bei einer Slotaufteilung nach Figur 9.10 zu erwartenden Spitzenamplituden der empfängerseitig komprimierten Signale in den Zeitschlitzen 0, 1, ..., m berechnet.

Figur 9.12 gibt ein Beispiel zur Änderung der Slotdaten bei geänderten Systemanforderungen. Die Referenz dafür ist Figur 9.10. Geändert haben sich die Slotbreiten für die Slots $S_2$, $S_3$ und $S_4$ und die zugewiesene Sendeleistung für Slot 3.

In Figur 9.13 werden die bei einer geänderten Slotaufteilung nach Figur 9.12 zu erwartenden Spitzenamplituden der empfängerseitig komprimierten Signale in den Zeitschlitzen 0, 1, ..., m berechnet.

Figur 9.14 stellt für das aus Figur 9.9 bekannte TDMA-Slot-Regime den Verlauf der Einhüllenden des Sendesignals dar. Werden, wie im Meßintervall $T_{S0}$, einzelne nicht überlappende Chirpimpulse übertragen, dann sind die Anstiegs- bzw. Abfallzeiten von der Bandbreite des Senders abhängig. Werden überlappende Chirpimpulse übertragen, dann haben die Flanken einen flacheren Verlauf. Die Anstiegs- und Abfallzeiten sind in diesem Fall zusätzlich abhängig von der Anzahl n der überlappenden Impulse.

Die Darstellung im unteren Bildteil verdeutlicht diesen Effekt. In einem Ausschnitt hervorgehoben sind das Abklingen des zweiten Chirpimpulses im Meßintervall $T_{S0}$ und der Verlauf der steigenden Flanke im Synchronisationsintervall $T_{S1}$ .

Herausgestellt ist dabei der Mechanismus der Zeitspreizung bei der Passage eines dispersiven Filters. Diese Zeitspreizung kann man so interpretieren, als würde jedes Symbol in einen Chirpimpuls der Länge T umgewandelt. Die Abfolge von Symbolen im zeitgespreizten Signal stellt sich dann als Folge von Chirpimpulsen gleicher Charakteristik dar, die um den Symbolabstand Δt gegeneinander versetzt erzeugt und additiv überlagert werden. Erst nach einem Zeitraum von ca. n Δt erreicht diesteigende Flanke ihren Endpunkt. (Diese Darstellung ist stark vereinfacht. Wenn eine bipolare Folge von sin(x)/x-Impulsen übertragen wird, dann überlagern sich in Wirklichkeit zeitlich versetzte Chirpimpulse mit statistisch verteiltem Wechsel der Polarität.) Grundsätzlich aber kann der Verlauf der Flanken der Einhüllenden mit diesem Modell erklärt werden.

Die Erfindung und ihre besonderen Vorteile lassen sich wie folgt zusammenfassen: Das erfindungsgemäße Übertragungsverfahren bzw. erfindungsgemäße Mehrfachzugriffssystem arbeitet mit frequenz- und zeitgespreizten Signalen und das erfindungsgemäße Verfahren ermöglicht einen Betrieb mit teilnehmerbezogenen unterschiedlichen und variablen Symbolraten. Jedem Teilnehmer wird unabhängig von der geforderten Symbolrate R die volle Kanalbandbreite B zugewiesen. Bestehen Frequenzreserven, das heißt, ist die Kanalbandbreite größer als die Symbolrate R, dann werden diese Frequenzreserven automatisch und unmittelbar in einen Systemgewinn durch frequenzgespreizte Übertragung umgesetzt: Die Verfahren zur Frequenz- und Zeitspreizung können allein auf der physikalischen Ebene umgesetzt werden. Dadurch ist es möglich, den Systemgewinn durch einfaches Verändern der Datenrate zu steuern, ohne weitere Systemeigenschaften zu verändern (neu zu initialisieren oder ähnliches).

Das Frequenzspeizverfahren (Symbolweise Quasidirac-Impulsformung mit anschließender Anpaßfilterung) garantiert, daß jedes Nachrichtensymbol auf die volle Kanalbandbreite gespreizt wird. Die anschließende Zeitspreizung (Umwandlung der frequenzgespreizten Symbole im Sender in Chirp-Impulse) wird in einfacher Weise dadurch erreicht, daß die Folge frequenzgespeizter Symbole ein dispersives Filter geeigneter Frequenz-Laufzeit-Charakteristik (zum Beispiel ein SAW-Chirp-Filter) passiert.

Die Rückwandlung der Chirp-Signale auf Empfängerseite geschieht mit einem weiteren Chirp-Filter, dessen Frequenz-Läufzeit-Charakteristik umkehrt zu der des sendeseitigen Chirp-Filters ist.

Die beschriebene umgekehrte Frequenz-Laufzeit-Charakteristik zwischen Sende- und Empfangs-Chirp-Filter ist die einzige Bedingung, die zur Rückwandlung erforderlich ist. Werden Chirp-Filter dieser Charakteristik als passive Bauelemente (beispielsweise in SAW-Technik (SAW = Surface Accustic Wave)) ausgeführt, dann kann die Rückwandlung der Chirp-Signale und bei geeigneter Wahl des Modulationsverfahrens auch die Demodulation der empfangenen Signale vollständig asynchron erfolgen.

Die vollständige Ausnutzung der Gesamtkanalbandbreite für die Übertragung jedes einzelnen Symbols prädestiniert die Sendeimpulse (zeitgespreizte Signale) auch für die Kanalschätzung. Wird ein derartig breitbandiges Symbol (Chirp-Impuls) gesendet, dann regt es den Kanal über seine gesamte Bandbreite mit gleicher Intensität an. Im Empfänger nimmt das Chirp-Filter die Transformation vom Frequenzbereich in den Zeitbereich vor, so daß am Filterausgang unmittelbar die Impuls-Antwort des Kanals erscheint. Mit der symbolweisen Zeitspreizung verbunden ist eine Unterdrückung von Störungen, die dem Nachrichtensignal auf dem Übertragungsweg überlagert werden. Die empfängerseitige Entspreizung (Kompression) der empfangenen Symbole bewirkt gleichzeitig eine Spreizung (Expansion) der überlagerten Störsignale. Durch diesen Vorgang wird die Störenergie über einen größeren Zeitraum verteilt, die Wahrscheinlichkeit, daß die Informationssymbole zerstört werden, sinkt.

Bei dem erfindungsgemäßen Übertragungsverfahren reicht ein einziges Symbol (Chirp-Impuls) aus, um die vollständige Kanalimpulsantwort präzise zu ermitteln.

Das schließt nicht aus, daß durch Übertragung mehrerer aufeinanderfolgender Referenzsymbole in einem dem maximalen Delayspread entsprechenden Abstand diese Genauigkeit durch Mittelwertbildung oder durch Autokorrelation noch gesteigert werden kann.

Das erfindungsgemäße Übertragungsverfahren stellt bereits auf der physikalischen Ebene ein Maß an Flexibilität und Funktionalität zur Verfügung, das andere bekannte Systeme (CDMA, TDMA, FDMA) erst auf übergeordneten Ebenen der Signalverarbeitung mittels Computeroperationen realisieren können.

Um beispielsweise die Übertragungsdatenrate zu halbieren, wird bei dem beschriebenen erfindungsgemäßen Übertragungsverfahren der zeitliche Abstand zwischen zwei aufeinanderfolgenden Symbolen und die Energie des Einzelsymbols verdoppelt. Dadurch werden auch bei halbierter Datenrate die Kanalressourcen vollständig ausgenutzt. Für den gleichen Effekt müßten andere System Redundanz in den Datenstrom einfügen (zum Beispiel durch Faltung). Dadurch wird bei unveränderter physikalischer Symbolrate die für einen Benutzer sichtbare Datenrate halbiert.

**Patentansprüche**

1. Verfahren zur Übertragung von Informationssymbolen mit einer Symbolrate (R) über einen Kanal mit einer Kanalbandbreite (B), bei dem

   - die Informationssymbole senderseitig einer Frequenzspreizung und einer Zeitspreizung und empfängerseitig einer entsprechenden Entspreizung unterzogen werden,wobei
   - die jeweiligen Spreizungen und damit der Systemgewinn adaptiv auf die geforderte Übertragungsqualität und die Kanaleigenschaften abgestimmt werden.

2. Verfahren nach Anspruch 1, bei dem sich der Systemgewinn des Übertragungsverfahrens durch eine Variation der betreffenden Symbolrate gesteuert wird.

3. Verfahren nach Anspruch 1 oder 2, bei dem die Frequenzspreizung und/oder Zeitspreizung in Abhängigkeit von wenigstens einem der Parameter Sendeleistung, Bitfehlerrate und/oder Übertragungsgeschwindigkeit (Bitrate) eingestellt wird.

4. Verfahren nach einem der vorherigen Ansprüche, wobei die Frequenzspreizung des Informationssymbols durch eine Quasidirac-Impulsformung mit anschließender Filterung erfolgt, wobei jedes Informationssymbol auf eine große, bevorzugt die volle, zur Verfügung stehende Kanalbandbreite gespreizt wird, wobei die Zeitspreizung mittels Faltung eines Informationssymbols mit einem Korrelationssignal, bevorzugt Chirp-Impulssignal, erfolgt.

5. Verfahren nach einem der vorherigen Ansprüche, bei dem die Sendeleistung und/oder eine Bitrate und/oder die Bitfehlerrate der Informationssymbole individuell auf den Teilnehmer abgestimmt werden.

6. Verfahren nach wenigstens einem der vorherigen Ansprüche, bei dem die frequenz- und /oder zeitgespreizten Signale zur Kanalschätzung verwendet werden.

7. Verfahren nach einem der vorherigen Ansprüche, bei dem eine Verringerung der Symbolrate bei konstanter Kanalbandbreite eine stärkere Frequenzspreizung zur Folge hat.

8. Verfahren nach Anspruch 7, bei dem die Frequenzspreizung in zwei Schritten erfolgt, nämlich einem ersten Schritt, in dem eine Quasidirac-Impulsformung für jedes einzelne Informationssymbol, unabhängig von der Symbolrate, erfolgt, und einemzweiten Schritt, in dem die Quasidirac-Impulsfolge einer Bandpaßfilterung unterzogen wird.

9. Verfahren nach einem der vorhergehenden Ansprüche, bei dem ein senderseitig gespreiztes Signal empfangsseitig einer entsprechenden Kompression unterzogen wird.

10. Verfahren nach einem der vorhergehenden Ansprüche, bei dem vor einer Informationssymbolübertragung von der Empfangsseite die Werte für eine gewünschte Übertragungsgeschwindigkeit, geforderte Bitfehlerrate und eine gewünschte, gegebenenfalls auch eine erlaubte Sendeleistung an die Sendeseite mitgeteilt werden, und bei dem die Übertragung so erfolgt, daß die genannten gewünschten, gegebenenfalls erlaubten und geforderten Werte eingehalten werden oder die Übertragung - wenn die Einhaltung der Werte nicht möglich ist - so erfolgt, daß die Einhaltung wenigstens eines Werts gegenüber einem anderen Wert priorisiert wird.

11. Verfahren nach Anspruch 10, bei dem zur Sprachübertragung die Priorisierung in der Reihenfolge "Sendeleistung, Übertragungsgeschwindigkeit, Bitfehlerrate" und bei der Übertragung von wichtigen Daten die Priorisierung in der Reihenfolge "Bitfehlerrate, Sendeleistung, Übertragungsgeschwindigkeit" erfolgt.

12. Verfahren nach einem der vorhergehenden Ansprüche, bei dem die Übertragung von Informationssymbolen in Zeitschlitzen erfolgt und die Sendeleistung in aufeinanderfolgenden Zeitschlitzen, abhängig vom Systemgewinn in einem Zeitschlitz, unterschiedlich eingestellt wird.

13. Verfahren nach Anspruch 12, bei dem die Übertragung von Informationssymbolen mittels Rahmen mit einer Rahmenlänge (TF) erfolgt, wobei ein Rahmen ein Intervall zur Kanalmessung, wenigstens einen Organisationskanal und m voneinander unabhängige Nachrichtenkanäle aufweist, deren Zeitschlitzlängen gleich oder unterschiedlich sind, und bei dem und die Sendeleistung eines einzelnen Kanals in Abhängigkeit des Systemgewinns bestimmt wird.

14. Verfahren nach den Ansprüchen 12 und 13, bei dem die einzelnen Teilnehmer-Zeitschlitze in einem TDMA-Rahmen in Abhängigkeit von der zugeordneten Sendeleistung, vorzugsweise nach aufsteigender Sendeleistung sortiert, angeordnet werden.

15. Verfahren nach einem der Ansprüche 12 und 13, bei dem sich in einem Zeitschlitz die Sendeleistung zu jedem Zeitpunkt auf n überlappende Chirp-Impulse aufteilt.

16. Verfahren nach einem der vorhergehenden Ansprüche, bei dem im Zeitschlitz zur Kanalmessung der Symbolabstand so groß eingestellt wird, daß sich benachbarte Chirp-Impulse nicht mehr überlappen.

17. Verfahren nach einem der vorhergehenden Ansprüche, bei dem die Kenngrößen des logischen Kanals, nämlich Zeitschlitzlänge, Symbolrate innerhalb eines Zeitschlitzes und die für einen Zeitschlitz vorgesehene Sendeleistung, individuell für jeden Teilnehmer entsprechend den Eigenschaften des physikalischen Kanals und den teilnehmerspezifischen Anforderungen eingestellt werden.

18. Verfahren nach einem der vorhergehenden Ansprüche, bei dem die Zeitspreizung mittels eines dispersiven Filters geeigneter Frequenz-Laufzeit-Charakteristik erfolgt.

19. Verfahren nach einem der vorhergehenden Ansprüche, bei dem das für die Zeitspreizung verwendete Sendefilter und das für die Zeitkompression verwendete Empfangsfilter in Form von Oberflächenwellen-Filtern (SAW-Filter) realisiert sind.

20. Verfahren nach einem der vorhergehenden Ansprüche, bei dem das für die Zeitspreizung verwendete Sendefilter und das für die Zeitkompression verwendete Empfangsfilter in Form von Charged-Coupled-Device-Filtern realisiert sind.

21. Verfahren nach einem der vorhergehenden Ansprüche, bei dem ein im Empfänger zeitkomprimiertes Referenzsymbol ohne oder nur mit minimaler Nachbearbeitung als Schätzung der Kanalimpulsantwort, nachfolgend als Kanalschätzung bezeichnet, benutzt wird.

22. Verfahren nach einem der vorhergehenden Ansprüche, bei dem die Referenzsymbole auch zur Synchronisation des Symboltaktes im Empfänger benutzt werden.

23. Verfahren nach einem der vorhergehenden Ansprüche, bei dem speziell solche Korrelationssignale benutzt werden, deren Autokorrelation die erste Nyquistbedingung erfüllt, daß die Autokorrelation zu den Symbolzeitpunkten den Wert Null annimmt.

24. Verfahren nach einem der vorhergehenden Ansprüche, bei dem als Korrelationssignale Chirp-Signale benutzt werden, die mit dem Betragsfrequenzgang eines Wurzel-Nyquist-Filters gewichtet werden.

25. Verfahren nach einem der vorhergehenden Ansprüche, bei dem das zu benutzende Korrelationssignal vor Beginn der Informationsübertragung in Abhängigkeit von äußeren Bedingungen aus einer Menge von möglichen Korrelationssignalen ausgewählt wird.

26. Verfahren nach einem der vorhergehenden Ansprüche, bei dem der lineare Teil einer Entzerrung in Form eines FSE-Equalizers als Vorverzerrung auf Senderseite durchgeführt wird, nachdem diesem die Kanalschätzung des Empfängers zugänglich gemacht wurde.

27. Verfahren nach einem der vorhergehenden Ansprüche, bei dem die Kanalimpulsantwort in parametrischer Form ermittelt wird, indem in einem Iterationsprozeß jeweils ein Reflexionskoeffizient ermittelt, ein daraus resultierendes Mehrwegeecho bestimmt und von dem während der Equalisationsphase empfangenem Signal subtrahiert wird.

28. Mehrfachzugriffsverfahren für eine Mehrzahl von Teilnehmerstationen, die Informationssymbole senden oder empfangen, bei dem für jede Übertragung von Informationssymbolen ein Verfahren gemäß einem der vorstehenden Ansprüche verwendet wird, und bei dem teilnehmerbezogen variable Datenraten und Sendeenergien verwendet werden, wobei Informationssymbole adaptiv frequenz- und zeitgespreizt sequentiell über einen Kanal mit einer Kanalbandbreite (B) übertragen werden und empfangsseitig einer Frequenz- und Zeit-Entspreizung unterzogen werden.

29. Senderempfänger zur Durchführung des Verfahrens nach einem der vorhergehenden Ansprüche, welcher eine Sendeeinrichtung aufweist, die ausgebildet ist, Informationssymbole sowohl unter Frequenzspreizung als auch unter Zeitspreizung auszusenden, und welcher eine Empfangseinrichtung aufweist, die ausgebildet ist, empfangene Informationssymbole sowohl einer Frequenz- als auch einer Zeit- Entspreizung zu unterwerfen.

30. Sender zur Durchführung des Verfahrens nach einem der Ansprüche 1 bis 28, welcher eine Sendeeinrichtung aufweist, die ausgebildet ist, Informationssymbole sowohl unter Frequenzspreizung als auch unter Zeitspreizung auszusenden.

31. Sender nach Anspruch 30, bei dem die Sendeeinrichtung ausgebildet ist, die Frequenzspreizung der Informationssymbole durch eine Quasidirac-Impulsformung mit anschließender Filterung durchzuführen.

32. Sender nach Anspruch 30, bei dem die Sendeeinrichtung ausgebildet ist, die Frequenzspreizung der Informationssymbole durch eine Hochtastung der Informationssymbole durchzuführen und dabei jedes Informationssymbol auf die volle zur Verfügung stehende Kanalbandbreite zu spreizen.

33. Sender nach Anspruch 30, bei dem die Sendeeinrichtung ausgebildet ist, die Zeitspreizung der Informationssymbole mittels Faltung eines jeweiligen Informationssymbols mit einem Korrelationssignal durchzuführen.

**Claims**

1. Method of transmitting information symbols at a symbol rate (R) through a channel with a channel bandwidth (B), wherein

   - the information symbols are subjected to frequency spreading and time spreading at the transmitting end and to corresponding unspreading at the receiving end,
   - the respective spreadings and hence the system gain being adaptively matched to the required transmission quality and the channel characteristics.

2. Method according to claim 1, wherein the system gain of the transmission method is controlled by varying the respective symbol rate.

3. Method according to claim 1 or 2, wherein the frequency spreading and/or time spreading is adjusted as a function of at least one of the parameters of transmitter power, bit error rate and/or transmission speed (bit rate).

4. Method according to one of the preceding claims, wherein the frequency spreading of the information symbol is carried out by quasi-Dirac pulse forming with subsequent filtering, each information symbol being spread to a large channel bandwidth, preferably the entire bandwidth available, the time spreading being carried out by convoluting an information symbol with a correlation signal, preferably a chirp pulse signal.

5. Method according to one of the preceding claims, wherein the transmitter power and/or a bit rate and/or the bit error rate of the information symbols are individually matched to the user.

6. Method according to at least one of the preceding claims, wherein the frequency and/or time-spread signals are used to evaluate the channel.

7. Method according to one of the preceding claims, wherein a reduction in the symbol rate at a constant channel bandwidth results in a greater frequency spreading.

8. Method according to claim 7, wherein the frequency spreading is carried out in two steps, namely a first step in which quasi-Dirac pulse forming is carried out for each individual information symbol, independently of the symbol rate, and a second step in which the quasi-Dirac pulse sequence is subjected to band-pass filtering.

9. Method according to one of the preceding claims, wherein a signal spread at the transmitting end is subjected to corresponding compression at the receiving end.

10. Method according to one of the preceding claims, wherein, prior to information symbol transmission, the values for a desired transmission speed, required bit error rate and a desired and optionally the permitted transmitter power are communicated to the transmitting end by the receiving end, and wherein the transmission takes place in such a way that the above-mentioned desired, optionally permitted and required values are adhered to or - if it is not possible to adhere to the values - the transmission takes place in such a way that the adherence to at least one value is prioritised over another value.

11. Method according to claim 10, wherein for speech transmission the prioritisation is carried out in the order "transmitter power, transmission speed, bit error rate", and when transmitting important data the prioritisation is carried out in the order "bit error rate, transmitter power, transmission speed".

12. Method according to one of the preceding claims, wherein the transmission of information symbols is carried out in time slots and the transmitter power is adjusted differently in successive time slots, depending on the system gain in a time slot.

13. Method according to claim 12, wherein the transmission of information symbols is carried out using frames with a frame length (TF), wherein a frame comprises an interval for measuring the channel, at least one organisation channel and m different news channels, the time slot lengths of which are the same or different, and wherein the transmitter power of an individual channel is determined as a function of the system gain.

14. Method according to claims 12 and 13, wherein the individual user time slots are arranged in a TDMA frame as a function of the associated transmitter power, preferably graded in ascending transmitter power.

15. Method according to one of claims 12 and 13, wherein in one time slot the transmitter power at each moment is distributed over n overlapping chirp pulses.

16. Method according to one of the preceding claims, wherein in the time slot for measuring the channel the symbol interval is made large enough that adjacent chirp pulses no longer overlap.

17. Method according to one of the preceding claims, wherein the characteristics of the logic channel, namely the time slot length, symbol rate within a time slot and the transmitter power provided for a time slot, are adjusted individually for each user according to the properties of the physical channel and the user-specific requirements.

18. Method according to one of the preceding claims, wherein the time spreading is carried out by means of a dispersive filter of suitable frequency/run time characteristics.

19. Method according to one of the preceding claims, wherein the transmission filter used for the time spreading and the receiving filter used for the time compression are constructed as surface wave filters (SAW filters).

20. Method according to one of the preceding claims, wherein the transmission filter used for the time spreading and the receiving filter used for the time compression are constructed as charged couple device filters.

21. Method according to one of the preceding claims, wherein a reference symbol time-compressed in the receiver is used, with no or only minimal processing, as an evaluation of the channel pulse response, hereinafter referred to as the channel evaluation.

22. Method according to one of the preceding claims, wherein the reference symbols are also used to synchronise the symbol timing in the receiver.

23. Method according to one of the preceding claims, wherein correlation signals of the kind whose autocorrelation meets the first Nyquist condition that the autocorrelation at the symbol times assumes the value zero are used in particular.

24. Method according to one of the preceding claims, wherein the correlation signals used are chirp signals which are weighted with the sum frequency response of a matched filter.

25. Method according to one of the preceding claims, wherein the correlation signal to be used is selected from a quantity of possible correlation signals as a function of external conditions before the start of the information transmission.

26. Method according to one of the preceding claims, wherein the linear part of an equalisation in the form of an FSE equaliser is carried out as a pre-equalisation at the transmitting end, after the channel evaluation of the receiver has been made accessible thereto.

27. Method according to one of the preceding claims, wherein the channel pulse response is determined in parametric form by determining a reflection coefficient in an iteration process, in each case, measuring a multipath echo resulting therefrom and subtracting from the signal received during the equalisation phase.

28. Multiple access method for a plurality of user stations which transmit or receive information signals, wherein a method according to one of the preceding claims is used for each transmission of information symbols, and wherein the user-related variable data rates and transmission energies are used, information symbols being transmitted adaptively, having been frequency- and time-spread, sequentially through a channel with a channel bandwidth (B) and are subjected to frequency- and time-unspreading at the receiving end.

29. Transmitter-receiver for carrying out the method according to one of the preceding claims which comprises a transmitting device constructed to transmit information symbols with both frequency-spreading and time-spreading, and which comprises a receiving device designed to subject the information symbols received to both frequency- and time-unspreading.

30. Transmitter for carrying out the method according to one of claims 1 to 28, which comprises a transmitting device designed to transmit information symbols with both frequency-spreading and time-spreading.

31. Transmitter according to claim 30, wherein the transmitting device is constructed to carry out the frequency-spreading of the information symbols by quasi-Dirac pulse forming with subsequent filtering.

32. Transmitter according to claim 30, wherein the transmitting device is constructed to carry out the frequency-spreading of the information symbols by modulating the information symbols and at the same time spreading each information symbol to the full channel bandwidth available.

33. Transmitter according to claim 30, wherein the transmitting device is constructed to carry out the time-spreading of the information symbols by convoluting a respective information symbol with a correlation signal.

**Revendications**

1. Procédé de transmission de symboles d'information avec un taux de symboles (R) par un canal avec une largeur de bande de canal (B), dans lequel

   - les symboles d'information sont soumis côté émetteur à un étalement de fréquence et à un étalement de temps et côté récepteur, à un regroupement correspondant, sachant que
   - les étalements respectifs et ainsi le gain du système sont mis en concordance de manière adaptatrice avec la qualité de transmission requise et les propriétés de canal.

2. Procédé selon la revendication 1, dans lequel le gain du système du procédé de transmission est commandé par une variation du taux de symboles concerné.

3. Procédé selon la revendication 1 ou 2, dans lequel l'étalement de fréquence et/ou l'étalement de temps est ajusté en fonction d'au moins un des paramètres puissance d'émission, taux d'erreurs de bits et/ou vitesse de transmission (débit de bit).

4. Procédé selon l'une quelconque des revendications précédentes, sachant que l'étalement de fréquence du symbole d'information s'effectue grâce à une formation d'impulsion quasi de Dirac avec filtrage consécutif, sachant que chaque symbole d'information est étalé sur une grande largeur de bande de canal disponible, de manière préférée la largeur de bande complète, sachant que l'étalement dans le temps s'effectue au moyen de la convolution d'un symbole d'information avec un signal de corrélation, de manière privilégiée un signal d'impulsion de puce.

5. Procédé selon l'une quelconque des revendications précédentes, dans lequel la puissance d'émission et/ou un débit de bit et/ou le taux d'erreurs de bits des symboles d'information sont adaptés individuellement sur le participant.

6. Procédé selon au moins l'une quelconque des revendications précédentes, dans lequel les signaux étalés en fréquence et/ou en temps sont utilisés pour l'évaluation du canal.

7. Procédé selon l'une quelconque des revendications précédentes, dans lequel une réduction du taux de symboles pour une largeur de bande constante de canal a pour conséquence un étalement plus important de la fréquence.

8. Procédé selon la revendication 7, dans lequel l'étalement de fréquence s'effectue en deux étapes, notamment une première étape, dans laquelle une formation d'impulsion quasi de Dirac s'effectue pour chaque symbole d'information individuel, indépendamment du taux de symboles, et une seconde étape, dans laquelle le train d'impulsions quasi de Dirac est soumis à une filtration passe-bande.

9. Procédé selon l'une quelconque des revendications précédentes, dans lequel un signal étalé côté émetteur est soumis côté récepteur à une compression correspondante.

10. Procédé selon l'une quelconque des revendications précédentes, dans lequel avant une transmission de symbole d'information par le côté récepteur sont communiquées au côté émetteur les valeurs pour une vitesse de transmission souhaitée, le taux d'erreurs de bits requis et une puissance d'émission souhaitée, éventuellement aussi permise, et dans lequel la transmission s'effectue de manière à ce que les valeurs énoncées souhaitées, éventuellement permises et requises, soient respectées ou la transmission - si le respect des valeurs n'est pas possible - s'effectue de manière à ce que le respect d'au moins une valeur obtienne la priorité par rapport à une autre valeur.

11. Procédé selon la revendication 10, dans lequel pour la transmission vocale, l'obtention de la priorité s'effectue dans l'ordre « puissance d'émission, vitesse de transmission, taux d'erreurs de bits » et lors de la transmission de données importantes, l'obtention de la priorité s'effectue dans l'ordre « taux d'erreurs de bits, puissance d'émission, vitesse de transmission ».

12. Procédé selon l'une quelconque des revendications précédentes, dans lequel la transmission de symboles d'information s'effectue en créneaux temporels et la puissance d'émission est réglée différemment en créneaux temporels successifs, en fonction du gain de système dans un créneau temporel.

13. Procédé selon la revendication 12, dans lequel la transmission de symboles d'information s'effectue au moyen d'une trame avec une longueur de trame (TF), sachant qu'une trame présente un intervalle pour la mesure du canal, au moins un canal d'organisation et m canaux d'informations indépendants les uns des autres, dont les longueurs de créneau temporel sont semblables ou différentes, et dans lequel la puissance d'émission d'un canal individuel est déterminée en fonction du gain de système.

14. Procédé selon les revendications 12 et 13, dans lequel les différents créneaux temporels des participants sont disposés dans une trame AMRT en fonction de la puissance d'émission affectée, triée de préférence selon une puissance d'émission croissante.

**15.** Procédé selon l'une quelconque des revendications 12 et 13, dans lequel dans un créneau temporel, la puissance d'émission se répartit à chaque moment en n impulsions de puce se chevauchant.

**16.** Procédé selon l'une quelconque des revendications précédentes, dans lequel dans le créneau temporel pour la mesure du canal, l'écart des symboles est ajusté en taille de manière à ce que des impulsions de puce voisines ne se chevauchent plus.

**17.** Procédé selon l'une quelconque des revendications précédentes, dans lequel les grandeurs connues du canal logique, notamment la longueur de créneau temporel, le taux de symboles à l'intérieur du créneau temporel, et la puissance d'émission prévue pour un créneau temporel, sont réglées individuellement pour chaque participant en fonction des propriétés du canal physique et des exigences spécifiques au participant.

**18.** Procédé selon l'une quelconque des revendications précédentes, dans lequel l'étalement de temps s'effectue au moyen d'un filtre dispersif avec une caractéristique de temps de propagation et de fréquence appropriée.

**19.** Procédé selon l'une quelconque des revendications précédentes, dans lequel le filtre d'émission utilisé pour l'étalement de temps et le filtre de réception utilisé pour la compression de temps sont réalisés sous forme de filtres à ondes de surface (filtres à ondes acoustiques de surface).

**20.** Procédé selon l'une quelconque des revendications précédentes, dans lequel le filtre d'émission utilisé pour l'étalement de temps et le filtre de réception utilisé pour la compression de temps sont réalisés sous forme de filtres à transfert de charge.

**21.** Procédé selon l'une quelconque des revendications précédentes, dans lequel un symbole de référence comprimé en temps chez le récepteur est utilisé sans ou seulement avec un traitement postérieur minimal comme évaluation de la réponse d'impulsion de canal, définie ensuite comme évaluation de canal.

**22.** Procédé selon l'une quelconque des revendications précédentes, dans lequel les symboles de référence sont également utilisés pour la synchronisation de l'action des symboles chez le récepteur.

**23.** Procédé selon l'une quelconque des revendications précédentes, dans lequel sont utilisés spécialement de tels signaux de corrélation, dont l'autocorrélation remplit la première condition de Nyquist de sorte que l'autocorrélation accepte la valeur zéro au moment des symboles.

**24.** Procédé selon l'une quelconque des revendications précédentes, dans lequel sont utilisés comme signaux de corrélation des signaux de puce, qui sont pondérés avec la valeur de la réponse en fréquence d'un filtre racine de Nyquist.

**25.** Procédé selon l'une quelconque des revendications précédentes, dans lequel le signal de corrélation à utiliser est sélectionné avant le début de la transmission d'information en fonction de conditions externes à partir d'une quantité de signaux possibles de corrélation.

**26.** Procédé selon l'une quelconque des revendications précédentes, dans lequel la partie linéaire d'une compensation est réalisée sous la forme d'un égaliseur FSE comme compensation préalable du côté émetteur, après que l'évaluation de canal du récepteur a été rendu accessible à l'égaliseur.

**27.** Procédé selon l'une quelconque des revendications précédentes, dans lequel la réponse d'impulsion de canal est déterminée sous forme paramétrique, en déterminant respectivement dans un processus d'itération un coefficient de réflexion, en fixant un écho à voies multiples qui en résulte et en le soustrayant au signal reçu pendant la phase d'égalisation.

**28.** Procédé d'accès multiple pour une pluralité de stations participantes, qui envoient ou reçoivent des symboles d'information, dans lequel pour chaque transmission de symboles d'information est utilisé un procédé selon l'une des revendications précédentes, et dans lequel sont utilisés des taux de données variables relatifs au participant et des énergies d'émission, sachant que des symboles d'information sont transmis de manière adaptatrice, en fréquence et temps étalés, en séquences, par un canal avec une largeur de bande de canal (B) et soumises, côté récepteur, à un regroupement de temps et de fréquence.

**29.** Emetteur-récepteur pour la réalisation du procédé selon l'une des revendications précédentes, lequel présente un dispositif d'émission, qui est conçu pour émettre des symboles d'information aussi bien sous étalement de fréquence qu'étalement de temps, et lequel présente un dispositif de réception qui est conçu pour soumettre des symboles d'information reçus aussi bien à un regroupement de fréquence qu'à un regroupement de temps.

**30.** Emetteur pour la réalisation du procédé selon l'une des revendications 1 à 28, lequel présente un dispositif d'émission, qui est conçu pour émettre des symboles d'information aussi bien sous étalement de fréquence que sous étalement de temps.

**31.** Emetteur selon la revendication 30, dans lequel le dispositif d'émission est conçu pour réaliser l'étalement de fréquence des symboles d'information grâce à une formation d'impulsion quasi de Dirac avec filtration consécutive.

**32.** Emetteur selon la revendication 30, dans lequel le dispositif d'émission est conçu pour réaliser l'étalement de fréquence des symboles d'information grâce à une manipulation supérieure des symboles d'information et pour étaler ainsi chaque symbole d'information sur la largeur de bande de canal complète disponible.

**33.** Emetteur selon la revendication 30, dans lequel le dispositif d'émission est conçu pour réaliser l'étalement de temps des symboles d'information au moyen de la convolution de chaque symbole d'information avec un signal de corrélation.

Fig. 1

EP 1 208 664 B1

Sende-Symbole → [1 ↑N] → [2] → [3 DA] → [4] → [5 Kanal] → [6] → [7 AD] → [8] → [9 FSE] → [10 ↓N] → ⊖(−) → [11] → Empfangs-Symbole

[12 DFE]

[13 Koeffizientenberechnung]

## Fig. 2

Sender

G $g_2$

$g_1$

$\Sigma$ $g_3$

LP

OSC $f_T$

AM $g_4$

$g_5$

Demodulator

$g_6$

$g_7$ LP

$T_{Ref}$

$T_{Signal}$

$T_{Ref}$

Empfänger

Koeffizientenbestimmung $g_9$

Equalizer $g_8$

Taktsteuerung

S&H

Fig. 3

Fig. 4

Fig. 5

Informationssymbole

Fig. 6a

Meßintervall $T_{Ref}$, Referenzsymbole

Fig. 6b

Summensignal, Quasidiracimpulse

Fig. 6c

Summe aus Referenz- und Datensequenz, AM-moduliert

Fig. 6d

Sendesignal

Fig. 6e

Fig. 6

Erster Start

Restart

Berechne Referenzpuls
$\approx \sin(x) / x$

Lege Referenzpuls in Speicher ab

Equalisationsperiode ? — Nein

Ja

Sample das komplexe Eingangssignal,
schreibe die Samples in Pufferspeicher

Equalisationsperiode ? — Ja

Nein

Berechne $\sigma_{Noise}$

Berechne Amplitudenschwelle
Schwelle = Faktor * $\sigma_{Noise}$

Nimm den Sample mit größtem Betrag
in Pufferspeicher als Reflektionskoeffezienten

Größter Samplebetrag > Schwelle ? — Nein

Ja

Berechne einen Reflektionspuls aus
Reflektionskoeffizient und Referenzpuls

Betrag des Reflektionspulssamples >
Betrag des Samples in Pufferspeicher ?

Ja          Nein

Sample in Pufferspeicher : = 0

Sample in Pufferspeicher : = Sample in
Pufferspeicher - Reflektionspulssample

Normiere die ermittelten
Reflektionskoeffizienten

Ende

Anmerkung:
Benutze komplexe
Arithmetik

Fig. 7

33

Fig. 8

Erforderliches $\frac{S}{N}$ zur
Einhaltung einer bestimmten BER

QPSK Modulation

vorgeschlagenes System mit k = 1

CDMA

vorgeschlagenes System

vorgeschlagenes System mit k >> 1

Datenrate
pro Kanal

## Fig. 9.1a

Einfache Modifikation des k - Wertes,
die den zeitlichen Abstand zwischen
Symbolen darstellt
$$\Delta t = k \cdot \delta$$

Beispiel

konstante Übertragungsleitung $P_{xmit}$

Fall 1: k = 10

Fall 2: k = 4

zeitl. entspreiztes Signal,
das ein Symbol darstellt

$U_{out}(t)$

$U_{s\,out} = U_s \cdot \sqrt{10}$

$\Delta t = 10 \cdot \delta$

$U_{out}(t)$

$U_{s\,out} = U_s \cdot \sqrt{4}$

$\Delta t = 4 \cdot \delta$

## Fig. 9.1b

## Fig. 9.1 Systemmerkmale

**Fig. 9.2a**

**Fig. 9.2b**

Wähle: $T \leq T_n$

**Fig. 9.2c**

**Fig. 9.2d**

$$\frac{U_{s\ out}}{U_{n\ out}} > \sqrt{n} \cdot \frac{U_s}{U_n} \quad \text{oder} \quad \frac{P_{s\ out}}{P_{n\ out}} > n \cdot \frac{P_s}{P_n}$$

**Fig. 9.2** Breitbandstörungen

Fig. 9.3 Initialisierung und Prioritätseinstellung

**Fig. 9.4** Höchste Priorität für : Übertragungsgeschwindigkeit

③

Für bestimmten Modulationstyp und gewünschten BER - Wert geforderten Wert des $E_S/N$ - Faktor berechnen

$E_S N$
[dB]

15

10

5

0

-5

$10^{-8}$    $10^{-6}$    $10^{-4}$    $10^{-2}$    1    BER

QPSK - Modulation

Was ist wichtiger (zweite Priorität)?

| Übertragungs-geschwindigkeit | reduzierte Senderleistung |

maximal mögliche Leistung des empfangenen Signals

$$P_{rec\_max} := \frac{P_{max}}{A_{link}}$$

maximal mögliche Leistung des empfangenen Signals für gegebene Senderleistung $P_{xmit}$

$$P_{rec} := \frac{P_{xmit}}{A_{link}}$$

④ ◄— von Fig. 9.6, 9.8

zeitl. Abstand zwischen Symbolen, ausgedrückt in $\delta$ - Einheiten

$$k := ceil\left(\sqrt{\frac{B \cdot E_S N \cdot N_{meas}}{P_{rec\_max}}}\right)$$

⑦

zeitl. Abstand zwischen Symbolen, ausgedrückt in $\delta$ - Einheiten

$$k := ceil\left(\sqrt{\frac{B \cdot E_S N \cdot N_{meas}}{P_{rec}}}\right)$$

⑦

Fig. 9.5 Höchste Priorität für : geforderte Bitfehlerrate

⑤

maximal mögliche Leistung des empfangenen Signals,für gegebene Senderleistung $P_{xmit}$

$$P_{rec} := \frac{P_{xmit}}{A_{link}}$$

Was ist wichtiger (zweite Priorität)?

| Bitfehlerrate | Übertragungs-geschwindigkeit |
|---|---|

Für gegebenen Modulationstyp und gewünschten BER - Wert geforderten Wert des $E_S/N$ - Faktor berechnen

QPSK - Modulation

④

$D_{req} > B?$

Nein

$$k := floor\left(\frac{B}{D_{req}}\right)$$

Ja

$k := 1$

von Fig. 9.4, 9.8 → ⑥

Es/N - Faktor berechnen

$$E_S N := \frac{P_{xmit} \cdot k^2}{A_{link} \cdot B \cdot N_{meas}}$$

Für gegebenen Modulationstyp und berechneten $E_S/N$ - Wert erreichten Wert der BER berechnen

QPSK - Modulation

⑧

Fig. 9.6 Höchste Priorität für : Sendeleistung

**Fig. 9.7** Systemparameter

⑥

```
┌─────────────────────────────────┐        ┌──────────────────────────────┐
│  Systemanforderungen erfüllt ?  │───Ja──▶│  Hardware gemäß berechneten  │
└─────────────────────────────────┘        │    Parametern einstellen     │
              │                             └──────────────────────────────┘
             Nein                                          │
              │                                            ▼
              │                             ┌──────────────────────────────┐
              │                             │   Kommunikation beginnen     │
              │                             └──────────────────────────────┘
              │                                            │
              │                                            ▼
              │                                   ( zum Start gehen )
              ▼
```

| Welcher Parameter ist nicht erreicht und am wichtigsten? | | |
|---|---|---|
| Übertragungsgeschwindigkeit | geforderte Bitfehlerrate | Senderleistung |

| Was ist wichtiger ? | |
|---|---|
| Sender-leistungs-reduktion | Über-tragungsge-schwindigkeit |

geforderte Senderleistung $P_{xmit}$ einstellen

⑤

Ja

◇ k = 1 ? ◇

Nein

┌──────────────────┐
│   Grenze des     │
│ Kommunikations-  │
│ kanal ist erreicht│
└──────────────────┘

$k := k - 1$

$k := k + 1$

Senderleistung $P_{xmit}$ erhöhen

②

⑥

⑥

┌──────────────────┐
│   Systemlast     │
│   reduzieren     │
└──────────────────┘

( zum Start gehen )

Fig. 9.8 adaptives Verfahren

## Ressourcenzuweisung

Sie ist einfach auf der Zeitachse zu ordnen und zu steuern und ermöglicht immer eine Nutzung der gesamten Systemkapazität, um die best mögliche Effizienz zu leiten.

### Beispiel der Ressourcenzuweisung für TDMA - Systeme

zugewiesene Ressourcen sind:

• Leistung des ausgestrahlten Signals für jeden Zeitslot

• Dauer jedes Zeitslots

wobei:

| | |
|---|---|
| $n_0, n_1, n_2, \dots, n_m$ | Anzahl der überlappeden Impulse für Zeitslots |
| $P_{max}$ | maximal erlaubte Leistung des Senders |
| $P_{S0}, P_{S1}, P_{S2}, \dots, P_{Sm}$ | zu gwiesene Senderleistung für Zeitslot Nummer 0, 1,2, ... , m |
| $S_0$ | dem Zeitequalistionsverfahren zugewiesener Zeitslot Nummer 0 |
| $S_1$ | dem Organisationskanal zugewiesener Zeitslot Nummer 1 |
| $S_2$ | dem ersten Verkehrskanal zugewiesener Zeitslot Nummer 2 |
| $S_3$ | dem zweiten Verkehrskanal zugewiesener Zeitslot Nummer 3 |
| $S_4$ | dem dritten Verkehrskanal zugewiesener Zeitslot Nummer 4 |
| $S_m$ | dem letzten Verkehrskanal zugewiesener Zeitslot Nummer m |
| $T_F$ | Dauer des Rahmens |
| $T_{S0}, T_{S1}, T_{S2}, \dots, T_{Sm}$ | Dauer des Zeitslots Nummer 0, 1, 2, ... , m |

$$T_F = \sum_{i=0}^{m} T_{Si}$$

## Fig. 9.9 Ressourcenzuweisung für Abtastsystem mit TDMA

## Beispiel des empfangenen Signals nach dem Zeitentspreizungsverfahren

Für Ressourcen, die wie in Fig. 9.9 dargestellt zugewiesen werden.

Fig. 9.10a

Fig. 9.10b

$$G_i = \frac{B \cdot T}{n_i}; \quad i = 0, 1, 2, \ldots, m$$

$$U_{Si\,out} = \sqrt{G_i \cdot \frac{P_{Si} \cdot R_0}{A_{link\,i}}} = \sqrt{\frac{B \cdot T \cdot P_{Si} \cdot R_0}{n_i \cdot A_{link\,i}}}$$

Fig. 9.10 Beispiel des empfangenen Signals

## Beispiel des empfangenen Signals nach
## dem Zeitentspreizungsverfahren
## (Fort.)

wobei:

$A_{link\ 0}, A_{link\ 1}, ..., A_{link\ m}$ Dämpfung des Links: Sender ↔ Empfänger
und für Zeitslot Nummer 0, 1, 2, ... , m

$B$ effektive Frequenzbandbreite des Systems

$G_0, G_{S1}, G_2, ..., G_m$ zusätzliche Systemverstärkung für Zeitslots 0, 1, 2, ... , m

$k_0, k_1, k_2, ..., k_m$ zeitl. Distanz zwischen Symbolen (ausgedrückt als ganzzahliges Vielfaches der δ - Zeit) für Zeitlslots 0, 1, 2, ... , m

$R_0$ Nominalwert des Lastwiderstands

$T$ Dauer des Chirpsignals

$\Delta t_0, \Delta t_1, \Delta t_2, ..., \Delta t_m$ zeitl. Distanz zwischen Symbolen für Zeitslot 0, 1, 2, ... , m

$U_{S0\ out}, U_{S1\ out}, ..., U_{Sm\ out}$ Amplitude des zeitentspreizten Symbols für Zeitslot Nummer 0, 1, ... , m (beispielweise beim Ausgang von der dispersiven Verzögerungsleitung → siehe Fig. 9.2)

Amplitude des zeitentspreizten Symbols

$$U_{S0\ out} = \sqrt{\frac{B \cdot T \cdot P_{S0} \cdot R_0}{A_{link\ 0}}}$$ Impulsamplitude für Kanal equalisationsverfahren

$$U_{S1\ out} = \sqrt{\frac{2 \cdot P_{S1} \cdot R_0}{A_{link\ 1}}}$$ Amplitude des Symbols für den Organisationskanal

$$U_{S2\ out} = \sqrt{\frac{4 \cdot P_{S2} \cdot R_0}{A_{link\ 2}}}$$ Amplitude des Symbols für den ersten Verkehrskanal

$$U_{S3\ out} = \sqrt{\frac{1 \cdot P_{S3} \cdot R_0}{A_{link\ 3}}}$$ Amplitude des Symbols für den zweiten Verkehrskanal

$$U_{S4out} = \sqrt{\frac{1 \cdot P_{S4} \cdot R_0}{A_{link\ 4}}}$$ Amplitude des Symbols für den dritten Verkehrskanal

$$U_{Sm\ out} = \sqrt{\frac{1 \cdot P_{Sm} \cdot R_0}{A_{link\ m}}}$$ Amplitude des Symbols für den letzten Verkehrskanal.

## Fig. 9.11 Beispiel des empfangenen Signals (Fort.)

## Modifizierte Ressourcenzuweisung gemäß veränderten Systemanforderungen

- weniger zugewiesene Zeit für Zeitslot $S_2$ und $S_3$
- weniger zugewiesene Senderleistung für Zeitslot $S_3$
- mehr zugewiesene Zeit für Zeitslot $S_4$

Nach Modifikation empfangenes Signal kann wie unten schematisch dargestellt werden.

Fig. 9.12 Ressourcenneuzuweisung

## Beispiel des empfangenen Signals nach
## Ressourcenzuweisung (Fort.)

Amplitude des zeitentspreizten Symbols

$$U_{S0\,out} = \sqrt{\frac{B \cdot T \cdot P_{S0} \cdot R_0}{A_{link\,0}}}$$  Impulsamplitude für Kanalequalisationsverfahren

$$U_{S1\,out} = \sqrt{\frac{2 \cdot P_{S1} \cdot R_0}{A_{link\,1}}}$$  Amplitude des Symbols für den Organisationskanal

$$U_{S2\,out} = \sqrt{\frac{4 \cdot P_{S2} \cdot R_0}{A_{link\,2}}}$$  Amplitude des Symbols für den ersten Verkehrskanal

$$U_{S3\,out} = \sqrt{\frac{1 \cdot P_{S3} \cdot R_0}{A_{link\,3}}}$$  Amplitude des Symbols für den zweiten Verkehrskanal

$$U_{S4\,out} = \sqrt{\frac{2 \cdot P_{S4} \cdot R_0}{A_{link\,4}}}$$  Amplitude des Symbols für den dritten Verkehrskanal

$$U_{Sm\,out} = \sqrt{\frac{1 \cdot P_{Sm} \cdot R_0}{A_{link\,m}}}$$  Amplitude des Symbols für den letzten Verkehrskanal

## Fig. 9.13 Ressourcenneuzuweisung (Fort.)

## Leistungeinhüllende des gesendeten Signals
## nach Zeitentspreizung

Leistungshüllkurve für Spezifikation aus Fig. 9.9

durch Frequenzbandbreite
des Senders bestimmte
Anstiegs / Abfallszeit

Anstiegs / Abfallszeiten sind
durch die Frequenzbandbreite
des Senders zusammen mit
der Anzahl überlappender
Impuls bestimmt

$P_{xmit}$

$P_{max}$

$P_{S0}$  $S_0$  $P_{S1}$  $S_1$  $P_{S2}$  $S_2$  $P_{S3}$  $S_3$  $P_{S4}$  $S_4$  $P_{Sm}$  $S_m$

t

$T_{S0}$  $T_{S1}$  $T_{S2}$  $T_{S3}$  $T_{S4}$  $T_{Sm}$

$n_0 = 1$  $n_1, n_2, \ldots, n_m > 1$

$T_F$

Anzahl überlappender Symbole
für Zeitslot Nummer 1 = $n_1$

$U_{xmit}(t)$

Einhüllende

$U_{xmit\ max}$

+

• • •

+

Superpositionsgesetz

+

t

Chirpimpuls für zweites
Symbol im Zeitslot Nummer 1

$t_{rise}$

T

$\Delta t_1$

Kanalmessungsimpuls

Chirpimpuls für erstes Symbol
im Zeitslot Nummer 1

$t_{rise}$

Symboleinhüllende

## Fig. 9.14 Chirpimpulsüberlappung